# EUROPEAN PATENT SPECIFICATION

(11) **EP 4 596 147 B1**
(45) Date of publication and mention of the grant of the patent: **28.10.2026**
(21) Application number: 23918423.7
(22) Date of filing: 27.01.2023
(51) Int. Cl.: B23B 1/00, B23B 25/06, B23B 29/24, G05B 19/404, B23B 3/16, B23B 7/12

(54) **LATHE, TURNING SYSTEM, AND METHOD FOR ESTIMATING POSITION OF LATHE EDGE**
DREHMASCHINE, DREHSYSTEM UND VERFAHREN ZUR SCHÄTZUNG DER POSITION EINER DREHKANTE
TOUR, SYSTÈME DE TOURNAGE ET PROCÉDÉ D'ESTIMATION DE LA POSITION DU BORD DU TOUR

(43) Date of publication of application: 06.08.2025
(73) Proprietor: Yamazaki Mazak Corporation, Niwa-gun, Aichi 480-0197 (JP)
(72) Inventor: FUKUTA, Kenji, Niwa-gun, Aichi 480-0197 (JP); TAMURA, Youji, Niwa-gun, Aichi 480-0197 (JP)
(74) Representative: TBK
(86) International application number: PCT/JP2023/002668
(87) International publication number: WO 2024/157463

(56) References cited:
- EP-A1- 1 217 481
- JP-A- 2003 025 188
- JP-A- 2007 203 392
- JP-A- 2015 052 872
- JP-A- 2016 093 872
- JP-A- H0 542 452
- JP-A- H05 233 040
- JP-A- H09 108 995
- JP-A- H11 123 632
- JP-A- S5 721 250
- US-A1- 2019 118 268

## Description

### Technical Field

The present invention relates to a lathe, a lathe machining system, and a method of estimating a nose position in a lathe.

### Background Art

Patent Literatures 1 and 2 disclose techniques associated with estimating a position of a nose of a machine tool. Patent Literature 1 discloses a technique that includes measuring a position misalignment between a nose position at which a tool is directly attached to a tool spindle and a nose position at which a tool is attached to the tool spindle via an attachment. The technique also includes storing the position misalignment. Patent Literature 2 discloses a mathematical model that obtains a position misalignment of nose position in a case that an angle head, which is an attachment, is used. The position misalignment is obtained based on a position misalignment parameter of the angle head and a dimension parameter of a tool. In these machine tools, the orientation of the tool can be adjusted by replacing the attachment.

In contrast, there are machine tools that eliminate the need for replacing attachments in the manners recited in Patent Literatures 1 and 2. Specifically, in a state in which a plurality of tools are mounted on a plurality of respective mounting surfaces of a tool post, the mounting surface for a tool used for machining is moved to replace attachments. Patent Literature 3 discloses an example of such machine tool. Specifically, Patent Literature 3 discloses a turret lathe. Patent Literature 4 discloses another example of such machine tool. Specifically, Patent Literature 4 discloses a tool post with a plurality of tools arranged in a comb-shaped configuration.

### Citation List

### Patent Literature

PTL1: JP3648054B.
PTL2: JP2010-280028A.
PTL3: JP2022-035083A.
PTL4: JP2016-036868A.

Documents EP 1 217 481 A1 and JP H09 108995 represent prior art relevant with regard to what is disclosed herewith.

### Summary of Invention

### Technical Problem

The techniques recited in Patent Literatures 1 and 2 assume that the attachment can be mounted on the tool spindle reproducibly, ensuring that any misalignment of the tool's nose is negligible. Once the position misalignment is measured, the same attachment can be mounted on the tool spindle again with the previously measured position misalignment reused. In the tool holder recited in Patent Literature 3 and the tool mounting section recited in Patent Literature 4, tools are attached to the tool post. This configuration does not necessarily allow for highly reproducible attachment to the tool post. Additionally, when the mounting surface of the lathe's tool post changes, the offset between an origin of the tool post and the mounting surface may also change. Under the circumstances, conventional practice was that each time a tool was attached to the lathe's tool post, the displacement between the nose of the tool and a reference position of the tool post was measured. As a result, there was an issue of prolonged arrangement time for the machine tool.

An object of the technique disclosed in the present application is to provide a lathe in which a plurality of tools are simultaneously attachable to a tool post. The lathe shortens an arrangement time for measuring position misalignments of positions of noses of a plurality of tools. Another object of the technique disclosed in the present application is to provide a lathe machining system that shortens the arrangement time. Another object of the technique disclosed in the present application is to provide a method of estimating a nose position in a lathe such that the method shortens the arrangement time.

### Solution to Problem

A lathe according to a first embodiment of the present disclosure includes a tool holder, a tool post, an actuator, and a numerical controller. The tool holder has a holder reference point, and a tool having a tool nose is attachable to the tool holder. The tool post has a tool post origin and has a plurality of mounting surfaces on which the tool holder is mountable. The actuator is configured to move the tool post to arrange each mounting surface of the plurality of mounting surfaces to an indexing position. The indexing position is determined in advance based on the structure of the lathe, and the lathe is configured to perform machining using the tool attached to the mounting surface moved to the indexing position. The numerical controller is configured to control the actuator. The numerical controller includes a memory and a processor. The processor is preferably a hardware processor. The memory is configured to store a first distance in a first direction between the holder reference point of the tool holder and the tool post origin at a time when a mounted surface, among the plurality of mounting surfaces, on which the tool holder is mounted is arranged at the indexing position and an attached tool is attached to the tool holder. The processor is configured to obtain an identifier of the attached tool. The processor is also configured to, obtain, from a storage device, a second distance in the first direction between the holder reference point and the tool nose at a time when the mounted surface is arranged at the indexing position and a candidate tool attachable to the tool holder is attached to the tool holder, the storage device storing a first correlation between an identifier of the candidate tool and the second distance, the obtained second distance corresponding to the identifier of the candidate tool that is identical to the identifier of the attached tool. The processor is also configured to, based on the obtained second distance and the first distance, estimate a third distance in the first direction between the tool post origin and the tool nose of the attached tool to control the actuator based on the third distance. The storage device may be the above-described memory or a storage device provided outside the lathe. The second distance is preferably a value measured in a state in which the candidate tool is removed from the tool holder.

According to a second embodiment of the present disclosure, in the lathe according to the first embodiment, when the tool is attached to the tool holder, the tool has a tool reference point that is substantially identical to the holder reference point. The second distance is a distance in the first direction between the tool reference point and the tool nose. It is to be noted that in a case that the tool is attached to the tool holder via an adapter, the tool reference point may be outside the tool. Alternatively, an adapter-equipped tool may be regarded as the above-described tool.

According to a third embodiment of the present disclosure, in the lathe according to the first or second embodiment, the tool post is a turret. The plurality of mounting surfaces are preferably a plurality of surfaces which define a single turret and on which a tool holder is mounted.

According to a fourth embodiment of the present disclosure, in the lathe according to the third embodiment, the first distance among the plurality of mounting surfaces varies from mounting surface to mounting surface. A difference between a maximum value and a minimal value of the first distance among the plurality of mounting surfaces is larger than a range of variation in a distance in the first direction between the holder reference point and the tool nose at a time when an identical tool is attached to the tool holder.

According to a fifth embodiment of the present disclosure, in the lathe according to the fourth embodiment, a range of variation in a position of the holder reference point in the first direction at a time when the tool holder is mounted on an identical mounting surface is larger than the range of variation in the distance in the first direction between the holder reference point and the tool nose at the time when the identical tool is attached to the tool holder.

According to a sixth embodiment of the present disclosure, in the lathe according to any one of the third to fifth embodiments, the tool post is rotatable about a rotation axis passing through the tool post origin, and the first direction is a direction perpendicular to the rotation axis or a direction parallel to the rotation axis.

According to a seventh embodiment of the present disclosure, the lathe according to the sixth embodiment further includes a workpiece holder configured to hold a workpiece rotatably about a workpiece rotation axis parallel to the rotation axis. The first direction is a direction perpendicular to the rotation axis and the workpiece rotation axis.

According to an eighth embodiment of the present disclosure, in the lathe according to the first or second embodiment, the plurality of mounting surfaces are provided on an identical plane.

According to a ninth embodiment of the present disclosure, in the lathe according to the eighth embodiment, the first direction is a normal direction of the identical plane or a direction perpendicular to the normal direction.

According to a tenth embodiment of the present disclosure, in the lathe according to any one of the first to ninth embodiments, the memory is configured to store a fourth distance in a second direction orthogonal to the first direction between the holder reference point of the tool holder and the tool post origin at the time when the mounted surface is arranged at the indexing position and the attached tool is attached to the tool holder. The processor is configured to obtain, from a storage device, a fifth distance in the second direction at a time when the candidate tool is attached to the tool holder, the storage device storing a third correlation between the identifier of the candidate tool and the fifth distance, the fifth distance corresponding to the identifier of the candidate tool that is identical to the identifier of the attached tool. The processor is also configured to, based on the obtained fifth distance and the fourth distance, estimate a sixth distance between the tool post origin and the tool nose of the attached tool to control the actuator based on the sixth distance.

According to an eleventh embodiment of the present disclosure, in the lathe according to any one of the first to tenth embodiments, the tool has a tool center axis, and the tool holder has a target center axis. The tool holder includes one of a guide surface and a guided surface guided by the guide surface, the guide surface extending along the target center axis in an insertion direction from one of the tool holder and the tool toward the other one of the tool holder and the tool and gradually approaching the target center axis along the insertion direction so that the tool center axis substantially share a common axis with the target center axis. The tool holder includes at least two posture adjustment surfaces or at least two contact surfaces contacting the at least two posture adjustment surfaces, the at least two posture adjustment surfaces crossing a circumferential direction centered around the common axis. The tool holder includes one of an engagement jaw and an engagement groove provided around the common axis and engageable with the engagement jaw. The engagement jaw is configured to regulate or deregulate movement of the tool in the insertion direction and a withdrawal direction opposite to the insertion direction. The tool includes the other one of the guide surface and the guided surface, the other one of the at least two posture adjustment surfaces and the at least two contact surfaces, and the other one of the engagement jaw and the engagement groove.

According to a twelfth embodiment of the present disclosure, in the lathe according to any one of the first to eleventh embodiments, a measurement tool having a measurement target is attachable to the tool holder. The first distance is a value obtained from a measurement value of a distance in the first direction between the measurement target and the tool post origin in a state in which the mounted surface is arranged at the indexing position and the measurement tool is attached to the tool holder, and obtained based on a seventh distance in the first direction between the holder reference point and the measurement target at a time when the mounted surface is arranged at the indexing position and the measurement tool is attached to the tool holder. It is to be noted that the above-described measurement tool preferably has the above-described tool reference point, and the seventh distance is preferably a distance in the first direction between the tool reference point and the measurement target.

According to a thirteenth embodiment of the present disclosure, in the lathe according to any one of the first to twelfth embodiments, the memory is configured to store a second correlation between an identifier of the mounted surface, the first distance, and the identifier of the attached tool. The processor is configured to obtain an identifier of a mounting surface arranged at the indexing position, and configured to determine the first distance and the identifier of the attached tool based on the obtained identifier of the mounting surface.

According to a fourteenth embodiment of the present disclosure, in the lathe according to the twelfth embodiment, the memory is configured to store a fourth correlation between an identifier of the mounted surface, the fourth distance, and the identifier of the attached tool. The processor is configured to obtain an identifier of the mounting surface arranged at the indexing position, and determines the fourth distance and the identifier of the attached tool based on the obtained identifier of the mounting surface.

A lathe machining system according to a fifteenth embodiment of the present disclosure includes the lathe according to the thirteenth or fourteenth embodiment, a tool presetter configured to obtain a tool identifier and measure the second distance for a measured tool identified by the obtained tool identifier in a state in which the measured tool is removed from the tool holder, a network via which the numerical controller and the tool presetter communicate with each other, and the storage device connected to the network. The storage device is configured to store the first correlation such that the first correlation correlates the identifier of the measured tool with data indicating the measured second distance. The processor is configured to obtain the second distance such that the second distance corresponds to the identifier of the measured tool that is identical to the identifier of the attached tool.

A method of estimating a nose position in a lathe, according to a sixteenth embodiment of the present disclosure, includes preparing a tool holder which has a holder reference point and to which a tool having a tool nose is attachable, and preparing a tool post having a tool post origin and having a plurality of mounting surfaces. The method includes mounting the tool holder on a mounted surface among the plurality of mounting surfaces, and attaching, to the tool holder, a measurement tool having a measurement target. The method includes moving the tool post to arrange the mounted surface to an indexing position, and measuring a distance in a first direction between the measurement target and the tool post origin. The method includes obtaining a seventh distance in the first direction between the holder reference point and the measurement target at a time when the mounted surface is arranged at the indexing position and the measurement tool is attached to the tool holder. The method includes, based on the measured distance and the seventh distance, obtaining a first distance in the first direction between the tool post origin and the holder reference point and storing the first distance. The method includes obtaining an identifier of a measured tool, measuring a second distance in the first direction between the holder reference point and the tool nose of the measured tool at a time when the mounted surface is arranged at the indexing position and the measured tool is attached to the tool holder, and storing a first correlation that correlates the identifier of the measured tool with the second distance. The method includes attaching an attached tool to the tool holder to arrange the mounted surface at the indexing position. The method includes obtaining an identifier of the attached tool, and obtaining the second distance such that the second distance corresponds to the identifier of the measured tool that is identical to the identifier of the attached tool, and estimating a third distance in the first direction between the tool post origin and the tool nose of the attached tool based on the obtained second distance and the first distance.

According to a seventeenth embodiment of the present disclosure, in the method of estimating the nose position, according to the sixteenth embodiment, when the tool is attached to the tool holder, the tool has a tool reference point that is substantially identical to the holder reference point. The second distance is a distance in the first direction between the tool reference point and the tool nose. It is to be noted that in a case that the tool is attached to the tool holder via an adapter, the tool reference point may be outside the tool. Alternatively, an adapter-equipped tool may be regarded as the above-described tool. The above-described measurement tool preferably has the above-described tool reference point, and the seventh distance is preferably a distance in the first direction between the tool reference point and the measurement target.

According to an eighteenth embodiment of the present disclosure, in the method of estimating the nose position, according to the sixteenth or seventeenth embodiment, the tool post is a turret. The plurality of mounting surfaces are preferably a plurality of surfaces which define a single turret and on which a tool holder is mounted.

According to a nineteenth embodiment of the present disclosure, in the method of estimating the nose position, according to the eighteenth embodiment, a difference between a maximum value and a minimal value of the first distance among the plurality of mounting surfaces is larger than a range of variation in a distance in the first direction between the holder reference point and the tool nose at a time when an identical tool is attached to the tool holder.

According to a twentieth embodiment of the present disclosure, in the method of estimating the nose position, according to the nineteenth embodiment, a range of variation in a position of the holder reference point in the first direction at a time when the tool holder is mounted on an identical mounting surface is larger than the range of variation in the distance in the first direction between the holder reference point and the tool nose at the time when the identical tool is attached to the tool holder.

According to a twenty-first embodiment of the present disclosure, in the method of estimating the nose position, according to any one of eighteenth to twentieth embodiments, the tool post is rotatable about a rotation axis passing through the tool post origin, and the first direction is a direction perpendicular to the rotation axis or a direction parallel to the rotation axis.

According to a twenty-second embodiment of the present disclosure, in the method of estimating the nose position, according to the twenty-first embodiment, the first direction is a direction perpendicular to the rotation axis and the workpiece rotation axis. The workpiece attached to the lathe is held rotatably about a workpiece rotation axis parallel to the rotation axis.

According to a twenty-third embodiment of the present disclosure, in the method of estimating the nose position, according to the sixteenth or seventeenth embodiment, the plurality of mounting surfaces are provided on an identical plane.

According to a twenty-fourth embodiment of the present disclosure, in the method of estimating the nose position, according to the twenty-third embodiment, the first direction is a normal direction of the identical plane or a direction perpendicular to the normal direction.

According to a twenty-fifth embodiment of the present disclosure, the method of estimating the nose position, according to any one of the sixteenth to twenty-fourth embodiments, includes measuring an additional distance between the measurement target and the tool post origin in a second direction orthogonal to the first direction. The method includes obtaining an eighth distance in the second direction between the holder reference point and the measurement target at a time when the mounted surface is arranged at the indexing position and the measurement tool is attached to the tool holder. The method includes, based on the measured additional distance and the eighth distance, obtaining a fourth distance in the second direction between the tool post origin and the holder reference point, and storing the fourth distance. The method includes measuring a fifth distance in the second direction between the holder reference point and the nose of the measured tool at a time when the mounted surface is arranged at the indexing position and the measured tool is attached to the tool holder, and storing a third correlation that correlates the identifier of the measured tool with the fifth distance. The method includes obtaining an identifier of the attached tool, obtaining the fifth distance such that the fifth distance corresponds to the identifier of the measured tool that is identical to the identifier of the attached tool, and, based on the obtained fifth distance and the fourth distance, estimating a sixth distance in the second direction between the tool post origin and the nose of the attached tool. It is to be noted that the fifth distance is preferably a distance in the second direction between the above-described tool reference point and nose.

According to a twenty-sixth embodiment of the present disclosure, the method of estimating the nose position, according to any one of the sixteenth to twenty-fifth embodiments, further includes storing a second correlation between an identifier of the mounted surface, the first distance, and the identifier of the attached tool. The method further includes obtaining an identifier of the mounting surface arranged at the indexing position, and determining the first distance and the identifier of the attached tool based on the obtained identifier of the mounting surface.

According to a twenty-seventh embodiment of the present disclosure, the method of estimating the nose position according to the twenty-fifth embodiment further includes storing a fourth correlation between an identifier of the mounted surface, the fourth distance, and the identifier of the attached tool. The method further includes obtaining an identifier of the mounting surface arranged at the indexing position, and determining the fourth distance and the identifier of the attached tool based on the obtained identifier of the mounting surface.

Turret lathes and machine tools equipped with tool posts with tools arranged in a comb-shaped configuration have a large number of mounted surfaces. Once a tool holder/tool mounting portion is mounted on such turret or machine tool, the tool holder/tool mounting portion is kept fixed to a mounted surface, and a tool attached to the tool holder/tool mounting portion is replaced with another tool. In this respect, tools can be attached to the tool holder/tool mounting portion with reproducibility high enough to ensure that any position misalignment of the position of the tool nose is negligible. Such features of machine tools are used in the lathe according to the first embodiment, the machine tool system according to the fifteenth embodiment including the lathe according to the first embodiment, and the method according to the sixteenth embodiment of estimating the nose position. Specifically, when an attached tool is attached anew to a tool holder, an identifier of the attached tool is obtained, a second distance is obtained using a first correlation, and a third distance in the first direction between the tool post origin and the nose of the attached tool is estimated based on the obtained second distance and a first distance. With this configuration, once the tool holder/tool mounting portion is fixed to the mounted surface and the first distance for the holder reference point is stored, the first distance can be reused when the tool on the tool holder/tool mounting portion is replaced with another tool. Also with the above configuration, the second distance can be measured by an external tool presetter or a similar device, even if a tool is not attached to the tool holder/tool mounting portion. This shortens the arrangement time for measuring displacements of the nose positions of a plurality of tools.

In the lathe according to the second embodiment, the lathe machining system according to the fifteenth embodiment including the lathe according to the second embodiment, and the method according to the seventeenth embodiment of estimating the nose position, the second distance is the distance between the tool nose and a tool reference point substantially identical to the holder reference point at a time attachment to the tool holder. This makes it easier for an external device to measure the second distance.

The lathe according to the third embodiment, the lathe machining system including the lathe according to the third embodiment, and the method according to the eighteenth embodiment of estimating the nose position make it possible for the technical features of the first embodiment to be applied to a plurality of mounted surfaces of a turret lathe.

In the lathe according to the fourth embodiment, the lathe machining system according to the fifteenth embodiment including the lathe according to the fourth embodiment, and the method according to the nineteenth embodiment of estimating the nose position, the machining error on the plurality of mounted surfaces of the turret lathe is larger than the range of position misalignment of the position of the nose of the tool attached to the tool holder. In such case as well, the machining error on the plurality of mounted surfaces of the turret lathe is calibrated by the first distance for the holder reference point. Therefore, it is not necessary to perform a separate calibration process on the machining error on the plurality of mounted surfaces of the turret lathe. This further improves effectiveness of the arrangement for measuring displacements of the nose positions of the plurality of tools.

In the lathe according to the fifth embodiment, the lathe machining system according to the fifteenth embodiment including the lathe according to the fifth embodiment, and the method according to the twentieth embodiment of estimating the nose position, the mounting variation of the tool holders on an identical mounting surface is larger than the range of position misalignment of the position of the nose of the tool attached to the tool holder. In such case as well, the mounting variation of the tool holders is calibrated by the first distance for the holder reference point. Therefore, it is not necessary to perform a separate calibration process on the machining error on the plurality of mounted surfaces of the turret lathe. This further improves effectiveness of the arrangement for measuring displacements of the nose positions of the plurality of tools.

In the lathe according to the sixth embodiment, the lathe machining system according to the fifteenth embodiment including the lathe according to the sixth embodiment, and in the method according to the twenty-first embodiment of estimating the nose position, the lathe moves the turret in a direction perpendicular or parallel to the rotation axis of the turret lathe during a machining process. This makes it possible to accurately estimate the offset of the movement direction during the machining process, resulting in highly accurate machining.

In the lathe according to the seventh embodiment, the lathe machining system according to the fifteenth embodiment including the lathe according to the seventh embodiment, and the method according to the twenty-second embodiment of estimating the nose position, the lathe moves the turret in a direction perpendicular to the rotation axis of the turret lathe and the workpiece rotation axis during a machining process. This makes it possible to accurately estimate the offset of the movement direction during the machining process, resulting in highly accurate machining.

The lathe according to the eighth embodiment, the lathe machining system according to the fifteenth embodiment including the lathe according to the eighth embodiment, and the method of estimating the nose position, according to the twenty-third embodiment make it possible for the technical features of the first embodiment to be applied to a tool post with a plurality of tools arranged in a comb-shaped configuration.

The lathe according to the ninth embodiment, the lathe machining system according to the fifteenth embodiment including the lathe according to the ninth embodiment, and the method according to the twenty-fourth embodiment of estimating the nose position, the lathe moves the tool post in a normal direction of the identical plane or in a direction perpendicular to the normal direction during a machining process. This makes it possible to accurately estimate the offset of the movement direction during the machining process, resulting in highly accurate machining.

The lathe according to the tenth embodiment, the lathe machining system according to the fifteenth embodiment including the lathe according to the tenth embodiment, and the method according to the twenty-fifth embodiment of estimating the nose position, the nose offset in the second direction perpendicular to the first direction can be calibrated.

In the lathe according to the eleventh embodiment and in the lathe machining system according to the fifteenth embodiment including the lathe according to the eleventh embodiment, the tool holder positions the tool nose position relative to the holder reference point highly accurately within an allowance range of a few to several micrometers.

In the lathe according to the twelfth embodiment, the lathe machining system according to the fifteenth embodiment including the lathe according to the twelfth embodiment, and the method according to the twenty-fifth embodiment of estimating the nose position, the first distance can be obtained using the measurement tool. Thus, the first distance can be measured more easily than directly measuring the holder reference point. Additionally, the use of a measurement tool eliminates the need for directly measuring the holder reference point. This ensures that the first distance can be obtained even in a machine whose driver has a small movable range.

In the machine tool according to the thirteenth and fourteenth embodiments, the machine tool system according to the fifteenth embodiment including the machine tool according to the twelfth embodiment, and the method according to the twenty-sixth and twenty-seventh embodiments of estimating the nose position, the first distance (fourth distance) and the identifier of the attached tool can be managed for each mounting surface. This facilitates flexible handling of mounting surface rotation and attached tool replacement.

### Effects of Invention

The technique disclosed in the present application shortens the arrangement time for measuring displacements of positions of noses of a plurality of tools.

### Brief Description of Drawings

[FIG. 1] FIG. 1 illustrates a schematic configuration of a lathe machining system according to a first embodiment.
[FIG. 2] FIG. 2 is an enlarged view of a turret.
[FIG. 3] FIG. 3 illustrates an example of a tool holder mounted on the turret and an example of a tool attached to the tool holder.
[FIG. 4] FIG. 4 illustrates an example of a tool post on which the tool holder is mounted.
[FIG. 5] FIG. 5 illustrates a state in which the tool is inserted in the tool holder.
[FIG. 6] FIG. 6 illustrates an example of the tool as seen from a direction along a tool center axis.
[FIG. 7] FIG. 7 is a block diagram of a hardware configuration of the lathe machining system according to the first embodiment.
[FIG. 8] FIG. 8 illustrates a schematic configuration of a tool attachment part of a tool presetter.
[FIG. 9] FIG. 9 is a schematic illustration of tool dimensions, tool holder dimensions, and tool post dimensions according to the first embodiment.
[FIG. 10] FIG. 10 illustrates an example of tool data.
[FIG. 11] FIG. 11 illustrates an example of mounting surface data according to the first embodiment.
[FIG. 12] FIG. 12 is a schematic illustration of a method of measuring a holder reference point of the tool holder.
[FIG. 13] FIG. 13 is a flowchart of processing in a method of estimating a nose position in a lathe.
[FIG. 14] FIG. 14 illustrates a schematic configuration of a lathe according to a second embodiment.
[FIG. 15] FIG. 15 is a block diagram of a hardware configuration of a lathe machining system according to the second embodiment.
[FIG. 16] FIG. 16 is a schematic illustration of tool dimensions, tool holder dimensions, and tool post dimensions according to the second embodiment.
[FIG. 17] FIG. 17 illustrates an example of mounting surface data according to the second embodiment.

### Description of Embodiments

The present invention will now be described with reference to the accompanying drawings, wherein like reference numerals designate corresponding or identical elements throughout the various drawings.

### <First Embodiment>

### <Configuration of Lathe 1>

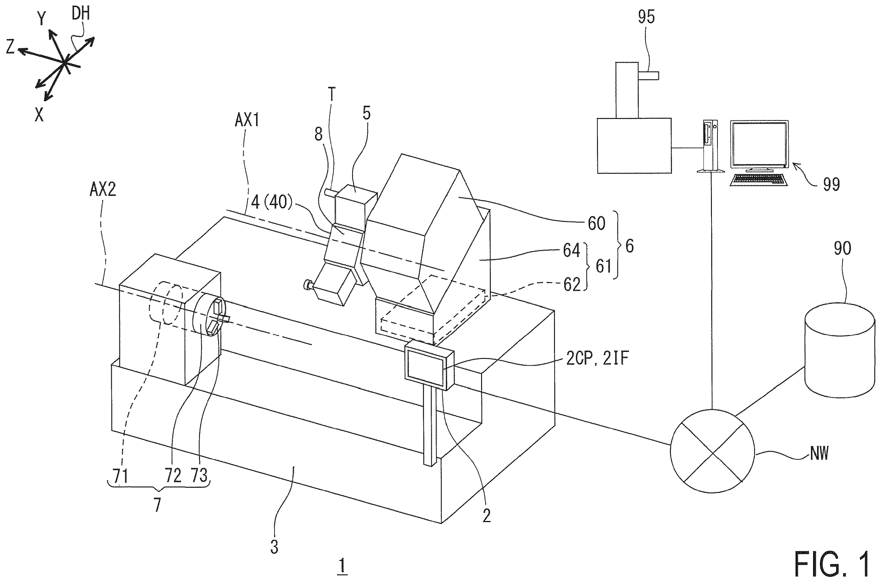

FIG. 1 illustrates a schematic configuration of a lathe machining system 100. The lathe machining system 100 includes a lathe 1 according to the first embodiment of the present disclosure. As used herein, the term "lathe " is intended to mean a machine tool primarily used for rotating a workpiece to perform operations such as external turning, boring, parting, facing, and threading using tools such as a cutting bit. The lathe machining system 100 includes the lathe 1, a network NW, a computer 99, a tool presetter 95, and a storage device 90. The storage device 90 is connected to the network NW. The network NW connects the computer 99 and the lathe 1 to each other to enables the lathe 1 and the tool presetter 95 to communicate with each other. The computer 99 may be a general-purpose computer that includes electronic circuits such as a hardware processor and memory. The tool presetter 95 is similar to, for example, the device disclosed in JP-H-3-66552A, and is a device that measures dimensions of a tool attached to a turret. The computer 99 controls the tool presetter 95 to measure the dimensions of the measured tool and transmit the obtained dimension data to the lathe 1. The network NW may be either a wired network such as an intranet or a wireless network such as a wireless LAN. In this embodiment, the storage device 90 is a network storage provided on the network NW. This network storage may, for example, be a cloud-based storage. The storage device 90 may be a memory within the computer 99 or a memory within a numerical controller 2, described later.

In this embodiment, the lathe 1 is a numerically controlled lathe configured as a turret lathe. As used herein, the term "numerically controlled lathe" is intended to mean a lathe that controls relative movement between a cutting tool and a workpiece based on numerical data such as position and speed, and performs a series of machining operations through programmed commands. The lathe 1 includes the numerical controller 2, a base 3. a tool post 4, a tool holder 5, an actuator 6, and a workpiece holder 7. In this embodiment, the tool post 4 is a turret 40. The turret 40 has a plurality of mounting surfaces 8. The actuator 6 includes a swivel driver 60 and a translation (linear) driver 61. The swivel driver 60 causes the turret 40 to rotate about a first axis AX1. The translation driver 61 causes the turret 40 to move on the base 3. It is to be noted that the translation driver 61 may be omitted. The first axis AX1 extends along Z axis of the three-dimensional orthogonal coordinate system illustrated in FIG. 1. An example of the swivel driver 60 is a motor. The swivel driver 60 positions the turret 40 to a predetermined angular position about the first axis AX1. For this purpose, in a case that the swivel driver 60 is either a stepper motor capable of controlling the rotational position using feedforward control or a servo motor, the swivel driver 60 preferably includes a rotational position detection sensor, such as an encoder, to position the turret 40 to a predetermined angular position about the first axis AX1.

The translation driver 61 includes a first driver 62 and a second driver 64. The first driver 62 is configured to move the tool post 4 in a Z axis direction. The second driver 64 is configured to move the tool post 4 in an X axis direction of the three-dimensional orthogonal coordinate system illustrated in FIG. 1. The X axis direction is perpendicular to the Z axis direction and crosses a horizontal direction *DH.* A Y axis direction in the three-dimensional orthogonal coordinate system is a direction perpendicular to the X axis direction and the Z axis direction. The X axis direction is a direction in which a tool T attached to the turret 40 is caused to translate when a workpiece is machined. In this embodiment, the X axis direction is 30 degrees inclined relative to a vertical direction. The orientation of the X axis direction varies depending on the structure of the lathe 1. The translation driver 61 (the first driver 62, the second driver 64) is made up of, for example, a motor and a ball screw. The translation driver 61 configured to determine the rotation position of the motor for the positioning of the tool post 4. For this purpose, the motor is preferably a stepper motor, or the translation driver 61 preferably includes a rotational position detection sensor, such as an encoder. To ensure a concise description, the translation driver 61 is not configured to move the tool post 4 in the Y axis direction. The translation driver 61, however, may further include a driver to move the tool post 4 in the Y axis direction.

The workpiece holder 7 includes a jaw 73, a chuck 72, and a swivel driver 71. The jaw 73 holds a workpiece. On the chuck 72, the jaw 73 is mounted. The swivel driver 71 causes the chuck 72 to rotate about a second axis AX2. The workpiece holder 7 may further include a driver with a function and a configuration that are similar to the function and the configuration of the first driver 62, which causes a movement in the Z axis direction. It is to be noted that the second axis AX2 is parallel to the first axis AX1. That is, the second axis AX2 extends along the Z axis of the three-dimensional orthogonal coordinate system. That is, the workpiece holder 7 is configured to hold the workpiece rotatably about the workpiece rotation axis (the second axis AX2). The X axis direction is a direction perpendicular to the first axis AX1 and the second axis AX2 and corresponding to a cutting direction in which the workpiece is cut. The swivel driver 71 is configured to control the rotational speed of the chuck 72. The numerical controller 2 is configured to control the actuator 6 (the swivel driver 60 and the translation driver 61).

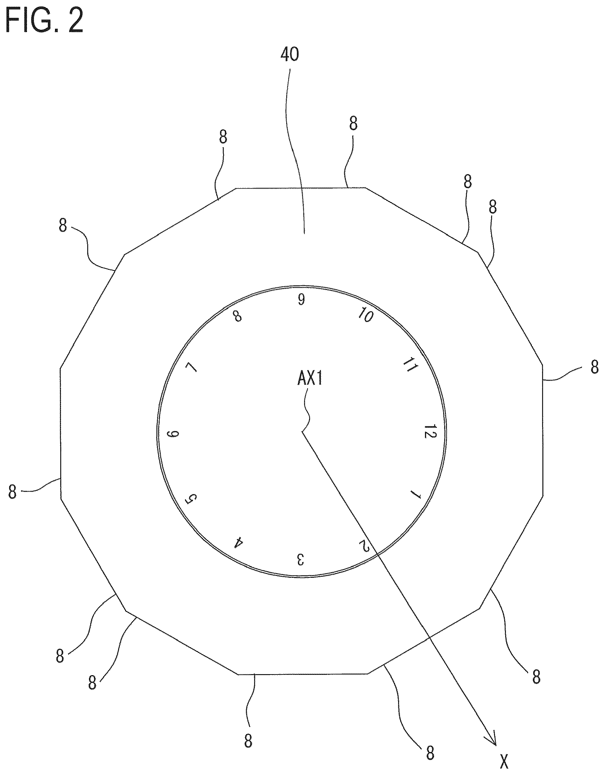

FIG. 2 is an enlarged view of the turret 40. Referring to FIG. 2, which is a view of the turret 40 as seen from a direction along the first axis AX1, the outer shape of the turret 40 is a substantially regular polygon centered around the first axis AX1. Each of the plurality of mounting surfaces 8 corresponds to one side of the regular polygon. As illustrated in FIG. 2, each of the plurality of mounting surfaces 8 is assigned a number. This number will be referred to as station number. In the example illustrated in FIG. 2, the plurality of mounting surfaces 8 are 12 surfaces, that is, the outer shape of the turret 40 is a regular dodecagon. In the following description of the embodiment, the position of a mounting surface, among the plurality of mounting surfaces 8, that is located along the X axis direction from the first axis AX1 will be referred to as indexing position. Each T code in a machining program includes a number corresponding to a station number. The turret 40 is rotated to position, to the indexing position, a mounting surface 8 with a station number corresponding to the number included in each T code. That is, the actuator 6 (the swivel driver 60) is configured to move the tool post 4 to position each mounting surface of the plurality of mounting surfaces 8 to the indexing position.

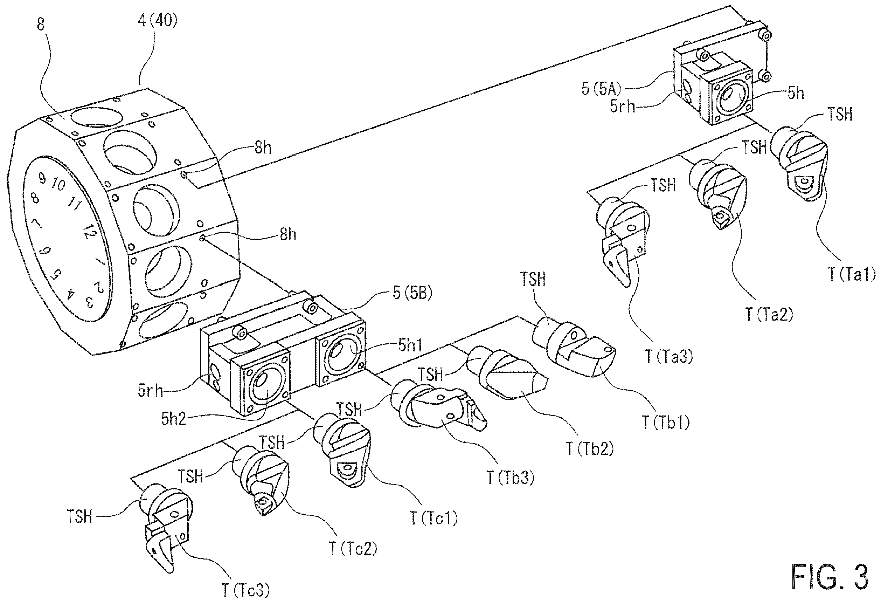

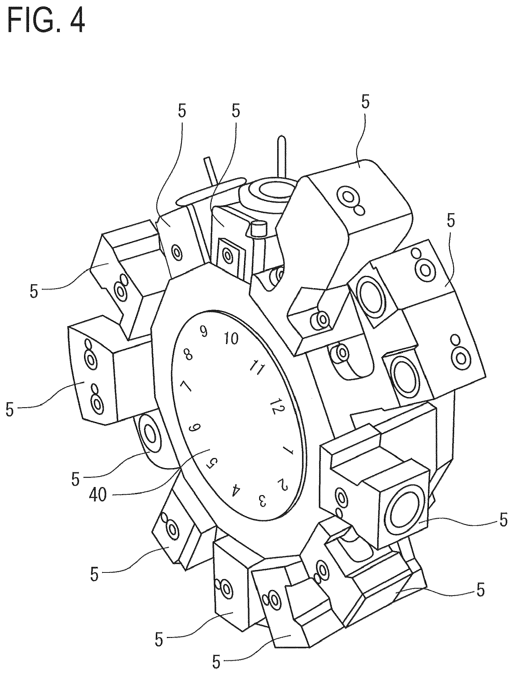

To the tool holder 5, the tool T is attachable. FIG. 3 illustrates an example of the tool holder 5 mounted on the turret 40 and an example of the tool T attached to the tool holder 5. Each of the plurality of mounting surfaces 8 has a plurality of mounting holes 8h for various tool holders 5 to be mounted on the each mounting surface 8. Thus, the tool holder 5 can be mounted on each of the plurality of mounting surfaces 8. Each of the plurality of mounting holes 8h may have a hole threaded to engage with a bolt to mount the tool holder 5, and may have a hole for inserting a pin for the positioning of the tool holder 5. Thus, the tool holder 5 can be mounted on each mounting surface 8 of the turret 40 so that the tool holder 5 can be mounted on all the mounting surfaces 8 of the turret 40 as illustrated in FIG. 4. It is to be noted, however, that the tool holder 5 may not necessarily be mounted on at least one mounting surface 8.

The tool holder 5 is a device that can be mountable on each of the plurality of mounting surfaces 8 and that is capable of attaching the tool T to the tool holder 5 reproducibly. As used herein, the term "reproducibly" in the context of attaching the tool T to the tool holder 5 is intended to mean that the misalignment in the nose position, occurring when the same tool T is mounted multiple times, is so small (for example, on the order of a few to several micrometers) that it is negligible during machining operations. The tool holder 5 is either a single holder 5A or a double holder 5B. The single holder 5A is capable of holding a single the tool T. The double holder 5B is capable of holding a plurality of tools T. The single holder 5A has an insertion hole 5h. In the insertion hole 5h, a tool shaft TSH of the tool T is inserted. The double holder 5B has insertion holes 5h1 and 5h2. In the insertion holes 5h1 and 5h2, the tool shaft TSH of the tool T is inserted. The insertion holes 5h, 5h1, and 5h2 are substantially identical in shape to each other so that various tools T (Ta1 to Ta3, Tb1 to Tb3, Tc1 to Tc3) can be attached to the tool holder 5. The tool shafts TSH of the tools T (Ta1 to Ta3, Tb1 to Tb3, Tc1 to Tc3) are substantially identical in shape to each other.

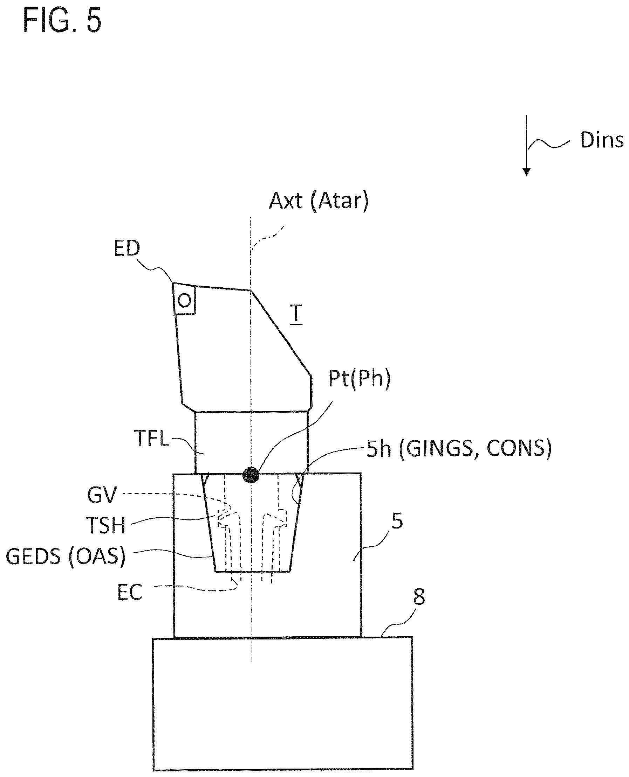

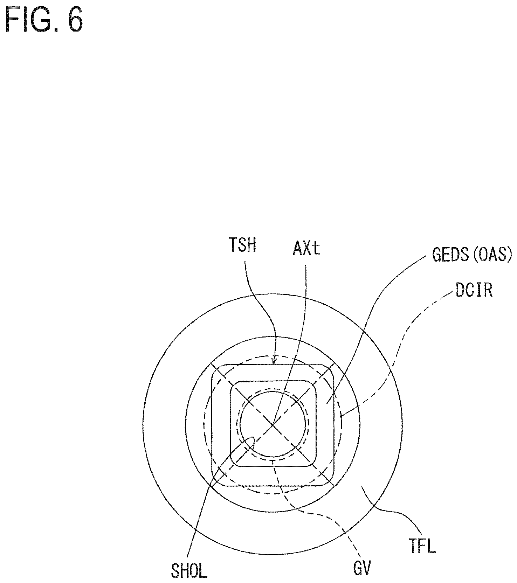

Next, a description will be made with regard to a structure of the tool holder 5, which is capable of holding the tool T reproducibly. FIG. 5 illustrates a state in which the tool T is inserted in the tool holder 5. The tool T includes the tool shaft TSH, a tool flange TFL, a tool center axis Axt, and a nose ED. The tool flange TFL is formed at one end of the tool shaft TSH. The tool center axis Axt is a center axis of the tool shaft TSH. The nose ED contacts a workpiece during machining of the workpiece. It is to be noted that the tool T may be regarded as being made up of a head having the nose ED and an adapter having the tool shaft TSH and that an adapter-equipped head may be regarded as the tool T. FIG. 6 illustrates an example of the tool T as seen from a direction along the tool center axis Axt. FIG. 6 illustrates the other end of the tool shaft TSH opposite to the tool flange TFL. It is to be noted that FIGs. 5 and 6 illustrate an example structure necessary for holding the tool T reproducibly and that there may be any other shapes capable of holding the tool T reproducibly. Specific examples of this shape include, for example, shapes compliant with ISO26623-1 standard, ISO12164 standard, and ISO26623-1 standard. Side surfaces of the tool shaft TSH form a tapered shape that extends along the tool center axis Axt and gradually approaches the tool center axis Axt in a direction away from the tool flange TFL. The side surfaces will be collectively referred to as guided surface GEDS.

The insertion hole 5h has a side surface shape that fits the guided surface GEDS of the tool shaft TSH. Side surface of the insertion hole 5h will be collectively referred to as guide surface GINGS. That is, the insertion hole 5h has a target center axis Atar. The target center axis Atar is equidistant from each guide surface GINGS of the insertion hole 5h. Due to this nature of the shape of the guide surface GINGS, when the tool shaft TSH is inserted fully into the insertion hole 5h, the tool center axis Axt becomes substantially coaxial with the target center axis Atar. Specifically, the guide surface GINGS extends along the target center axis Atar and gradually approaches the target center axis Atar in an insertion direction *Dins,* which extends from the tool T toward the tool holder 5. The guided surface GEDS is guided by the guide surface GINGS.

Referring to FIG. 6, the tool T (the tool shaft TSH) has at least two posture adjustment surfaces OAS (in the example illustrated in FIG. 6, the at least two posture adjustment surfaces OAS correspond to the guided surface GEDS, which constitutes the four side surfaces of an approximately regular truncated square pyramid shape). The at least two posture adjustment surfaces OAS cross a circumferential direction *DCIR,* which is centered around the tool center axis Axt. The tool holder 5 has at least two contact surfaces CONS (the guide surface GINGS of the insertion hole 5h). The at least two contact surfaces CONS contact the at least two posture adjustment surfaces OAS. By this configuration, the posture of the tool T around the target center axis Atar is determined.

Referring to FIGs. 5 and 6, the tool holder 5 includes a jaw EC. The tool T (the tool shaft TSH) includes a shaft hole SHOL and an engagement groove GV. The jaw EC is inserted into the shaft hole SHOL. The jaw EC is engageable with and disengageable from the engagement groove GV by a jaw slide mechanism, not illustrated. When the jaw EC is engaged with the engagement groove GV, the tool T is unable to move in a direction along the target center axis Atar relative to the tool holder 5. Thus, the jaw EC is fixed to the tool holder 5. With this configuration, the tool holder 5 is capable of holding the tool T reproducibly.

It is to be noted, however, that whether the tool T includes the guided surface GEDS or the tool holder 5 includes the guide surface GINGS, whether the tool T includes the engagement groove GV or the tool holder 5 includes the jaw EC, whether the tool T includes the at least two posture adjustment surfaces OAS or the tool holder 5 includes the at least two contact surfaces CONS can be freely determined through design modifications. In either case, the tool holder 5 is capable of holding the tool T reproducibly.

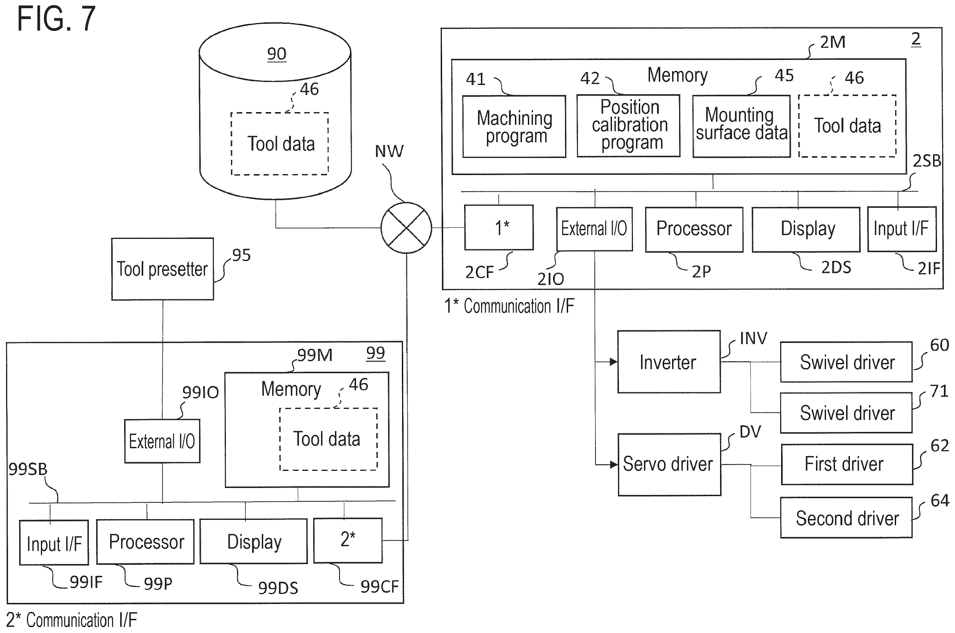

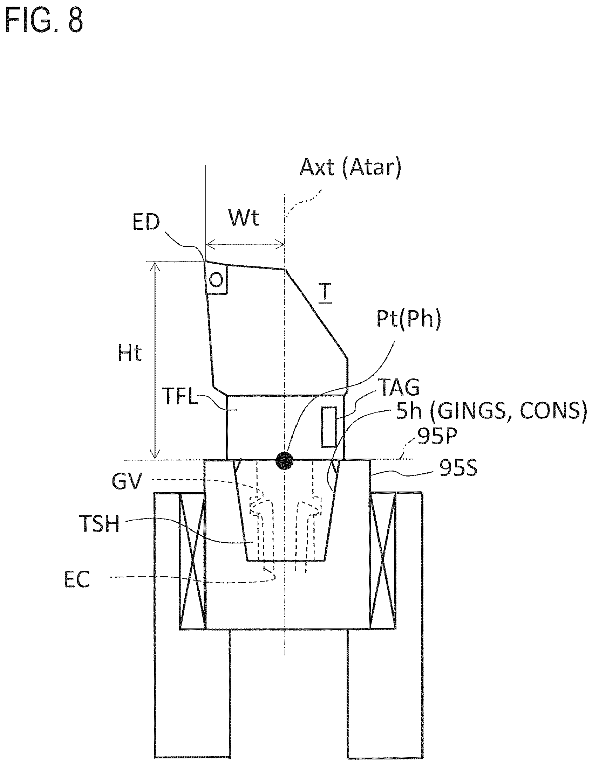

FIG. 7 is a block diagram of a hardware configuration of the lathe machining system 100 according to the first embodiment. The tool presetter 95 obtains an identifier (tool ID) of the tool T and measures distances in a plurality of directions between a holder reference point Ph (described later) and the position of the nose of the tool T. The tool presetter 95 is a device similar to the device disclosed in JP-H-3-66552A, as described above. Additionally, by applying the present invention, the tool presetter 95 has the following features. FIG. 8 illustrates a schematic configuration of a tool attachment part of the tool presetter 95. In the example illustrated in FIG. 8, the tool presetter 95 includes the guide surface GINGS, which is substantially identical to the guide surface GINGS of the tool holder 5, the at least two contact surfaces CONS, and a spindle 95S. The spindle 95S has the structure of the jaw EC. The spindle 95S is rotatable by a rotation device, not illustrated (such as a gear, a handle, or a motor), to point the nose ED in any direction. The holder reference point Ph is a point determined by the guide surface GINGS, the at least two contact surfaces CONS, the jaw EC, and the shape of the engagement groove GV of the tool T. For example, the holder reference point Ph is the intersection between the rotation axis of the spindle 95S (coaxial with the target center axis Atar) and a reference surface 95P of the spindle 95S. The reference surface 95P contacts the tool flange TFL of the tool T. It is to be noted that an internal point of the tool T that is substantially identical to the holder reference point Ph when the tool T is attached to the spindle 95S will be referred to as tool reference point Ph. The position of the holder reference point Ph (tool reference point Pt) in FIG. 8 is illustrated for exemplary purposes only; the holder reference point Ph (tool reference point Pt) may be located at any other position insofar as the holder reference point Ph (tool reference point Pt) is common to all the tools T attachable to the tool holder 5 and the spindle 95S and identifiable by the tool presetter 95 and insofar as the holder reference point Ph (tool reference point Pt) is reproducibly located at the same position when any tool T is attached to the tool holder 5 and the spindle 95S. While in this embodiment the tool presetter 95 is used to measure the position of the tool nose, it is possible to use other means to measure the position of the tool nose. In this case, the holder reference point Ph (tool reference point Pt) may be located at any other position insofar as the holder reference point Ph (tool reference point Pt) is reproducibly located at the same position when any tool T is attached to the tool holder 5.

As illustrated in FIG. 8, the tool T has a tag TAG. The tag TAG has an identifier (tool ID) of the tool T. An example of the tag TAG is a bar code. Another example of the tag TAG is an RF-ID. When the tool T is attached to the spindle 95S, the tool presetter 95 reads the tool ID from the tag TAG to measure a length *Ht* and a length *Wt.* The length *Ht* and the length *Wt* indicate a positional relationship between the holder reference point Ph (the tool reference point Pt) and the nose ED. The tool presetter 95 includes a known tag reader to read the tool ID from the tag TAG. For example, in a case that the tag TAG is a bar code, the tool presetter 95 includes a bar code reader. In a case that the tag TAG is an RF-ID, the tool presetter 95 includes an RF-ID reader.

The computer 99 includes a hardware processor 99P, a memory 99M, a display 99DS, an input interface 99IF, a system bus 99SB, an external I/O interface 99IO, and a communication interface 99CF. The tool presetter 95 is connected to the computer 99 via the external I/O interface 99IO, such as an RS-232C device, a USB, and a local area network (LAN). The computer 99 is connected to the network NW via the communication interface 99CF. By using these configurations and by executing a known control program for the tool presetter 95 and a data transmission and reception program, the computer 99 obtains, from the tool presetter 95, the measured dimensions of the measured tool and the identifier of the measured tool, and transmits the obtained data to the storage device 90. The storage device 90 stores the dimensions of the measured tool and the identifier of the measured tool in a manner in which the dimensions of the measured tool are correlated with the identifier of the measured tool. Tool data 46 illustrated in FIG. 7 is data that correlates the dimensions of the measured tool with the identifier of the measured tool.

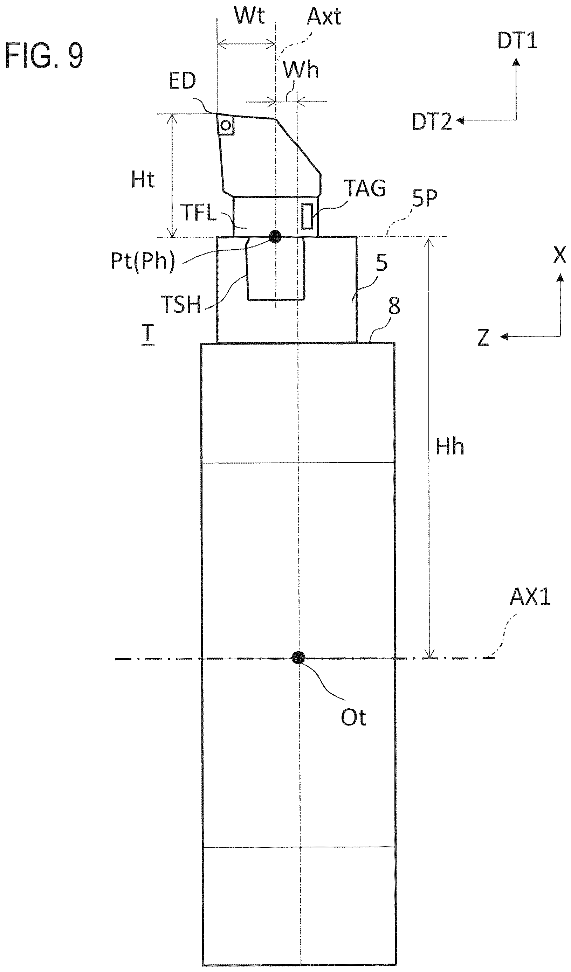

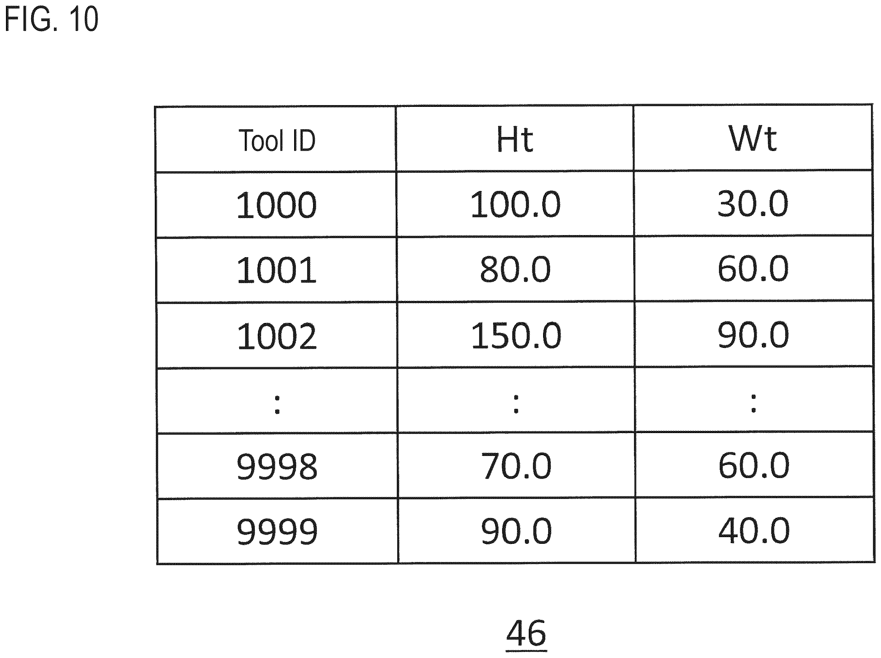

FIG. 9 is a schematic illustration of tool dimensions, tool holder dimensions, and tool post dimensions according to the first embodiment. FIG. 10 illustrates an example of the tool data 46. As illustrated in FIG. 9, the tool holder 5 includes the guide surface GINGS, which is substantially identical to the spindle 95S, the at least two contact surfaces CONS, and the structure of the jaw EC. Because of these shapes, the tool holder 5 has the holder reference point Ph, which corresponds to these shapes. The length *Ht* and the length *Wt,* which indicate the positional relationship between the holder reference point Ph (the tool reference point Pt) and the nose ED when the tool T is attached to the tool holder 5, are identical toa measurement result obtained by the tool presetter 95. The length *Ht* is a distance between the tool reference point Pt and the nose ED in a direction *DT1,* which extends along the tool center axis Axt. The length *Wt is* a distance between the tool reference point Pt and the nose ED in a direction *DT2,* which is a radial direction relative to the tool center axis Axt.

Referring to FIG. 10, the tool data 46 includes a correlation between the identifier (tool ID) of the tool T, the length *Ht,* and the length *Wt.* The tool T defined in the tool data 46 may be referred to as measured tool or candidate tool. While in FIG. 10 the correlation is expressed in table form, the tool data 46 may be expressed in any other form insofar as the tool data 46 has a data structure that can describe the correlation. Other examples of the data structure include a list, an array, and a database.

The numerical controller 2 includes an electronic circuit such as an electric control unit, a hardware processor 2P, a memory 2M, and a system bus 2SB. The hardware processor 2P is information processing means. The memory 2M is storing means. The system bus 2SB connects the hardware processor 2P to the other hardware. The numerical controller 2 also includes a control panel 2CP. The control panel 2CP, such as a touch panel display, receives and outputs information from and to an operator. The touch panel of the control panel 2CP may be referred to as input interface 2IF. The display of the control panel 2CP may be referred to as the display 2DS. It is to be noted that the numerical controller 2 may further include the input interface 2IF, in addition to the touch panel. The input interface 2IF includes a button and a dial. The numerical controller 2 further includes a communication interface 2CF. The communication interface 2CF is connected to the network NW. This enables the numerical controller 2 to obtain, via the communication interface 2CF, at least part of the tool data 46 stored in the storage device 90.

The memory 2M stores a machining program 41, a position calibration program 42, and mounting surface data 45. The machining program 41 is for machining a workpiece. The position calibration program 42 is programmed to refer to the mounting surface data 45 and at least part of the tool data 46 to estimate the nose position of the tool T, which nose position is specified by the machining program 41. For this purpose, the position calibration program 42 is preferably called from the machining program 41. Based on the estimated nose position, the position calibration program 42 transmits a control command to a servo driver DV. The servo driver DV controls the swivel driver 60 and the translation driver 61. The machining program 41, based on a command in the machining program, transmits a control command to an inverter INV. The inverter INV controls the swivel driver 71. The numerical controller 2 further includes a known external I/O interface 2IO. The external I/O interface 2IO is connected to the servo driver DV and the inverter INV to transmit these control commands. That is, the numerical controller 2 is configured to control the actuator 6.

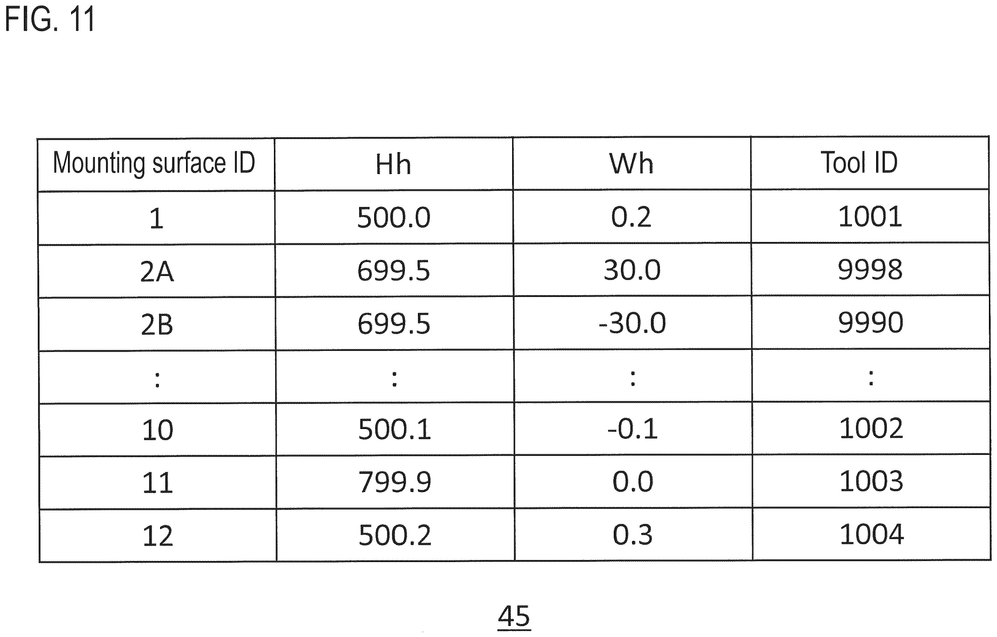

Next, details of the mounting surface data 45 will be described. FIG. 11 illustrates an example of the mounting surface data 45 according to the first embodiment. FIG. 9 is a schematic illustration of dimensions of the tool holder 5 according to the first embodiment and dimensions of the tool post 4 (the turret 40) according to the first embodiment. FIG. 9 illustrates the tool holder 5 and the tool post 4 with the X axis oriented upward and the Z axis oriented to the left on FIG. 9. FIG. 9 also illustrates the tool T in inserted position within the tool holder 5. The tool post 4 (the turret 40) has a tool post origin Ot. The tool post origin Ot is located on the first axis AX1. That is, the tool post 4 (the turret 40) is rotatable about a rotation axis (the first axis AX1) passing through the tool post origin Ot. The direction *DT1* is approximately identical to the X axis direction, and the direction *DT2* is approximately identical to the Z axis direction. In a precise sense, due to the influence of tool attachment misalignment on the tool holder 5, the position of the nose ED may slightly deviate in the Y-axis direction from a plane that passes through the tool post origin Ot and that is parallel to the X axis and the Z axis. However, the deviation in the Y axis direction aligns with the tangent direction of the rotation of the workpiece, becoming negligible in the deviation's influence on machining accuracy. There also may be a case that a machining error causes the mounting surface 8 to be slightly inclined from a plane parallel to the Y axis and the Z axis, which in turn causes the direction *DT1* to be slightly inclined from the X axis direction and the direction *DT2* to be slightly inclined from the Z axis direction. However, since the size of the tool T is small, the position misalignment of the nose ED caused by these inclinations is negligible.

As described above, the tool T has the tool reference point Pt, which is substantially identical to the holder reference point Ph when the tool T is attached to the tool holder 5. Since the tool holder 5 is capable of holding the tool T reproducibly, the tool reference point Pt can be considered to remain unchanged if any tool T attachable to the tool holder 5 is attached to the tool holder 5. Referring to FIG. 11, the mounting surface data 45 includes a correlation between: the identifier (mounting surface ID) of a mounted surface, among the plurality of mounting surfaces 8, on which the tool holder 5 is mounted; a distance *Hh,* which is a distance in the X axis direction between the tool post origin Ot and the holder reference point Ph; a distance *Wh,* which is a distance in the Z axis direction between the tool post origin Ot and the holder reference point Ph; and the tool T attached to the tool holder 5. In the following description, the tool T defined in the mounting surface data 45 may be referred to as attached tool. While in FIG. 11 the correlation is expressed in table form, the mounting surface data 45 may be expressed in any other form insofar as the mounting surface data 45 has a data structure that can describe the correlation. Other examples of the data structure include a list, an array, and a database.

The numerical part of the mounting surface ID indicates station number. A suffix (A or B) is attached to the numerical part of a mounting surface ID in a case that a double holder 5B is mounted on the mounting surface 8 corresponding to the station number of the mounting surface ID. The suffix is used to distinguish the insertion holes 5h1 and 5h2 of the double holder from each other. For example, among two holder reference points Ph determined by the insertion holes 5h1 and 5h2, the holder reference point Ph with a higher z-coordinate value (closer to the workpiece holder 7) may be identified as A, and the holder reference point Ph with a lower z-coordinate (farther away from the workpiece holder 7) may be identified as B.

In the following description of the embodiment, one of the distance *Hh* and the distance *Wh* will be referred to as first distance, and the other one of the distance *Hh* and the distance *Wh* will be referred to as fourth distance. One of the X axis direction and the Z axis direction that corresponds to an orientation serving as a reference of the first distance will be referred to as first direction, and the other one of the X axis direction and the Z axis direction that corresponds an orientation serving as a reference of the fourth distance will be referred to as second direction. That is, in a case that the distance *Hh* is the first distance and the distance *Wh* is the fourth distance, the X axis direction is the first direction and the Z axis direction is the second direction. In a case that the distance *Wh* is the first distance and the distance *Hh* is the fourth distance, the Z axis direction is the first direction and the X axis direction is the second direction. In other words, the first direction is a direction perpendicular to the first axis AX1 or a direction parallel to the first axis AX1.

According to the above-described definitions, the memory 2M stores the first distance (one of *Hh* and *Wh)* in the first direction (one of the X axis direction and the Z axis direction) between the holder reference point Ph of the tool holder 5 and the tool post origin Ot at the time when the mounted surface is arranged at the indexing position and the attached tool is attached to the tool holder 5. The memory 2M stores the fourth distance (the other of *Hh* and *Wh)* in the second direction (the other one of the X axis direction and the Z axis direction), which is orthogonal to the first direction, between the holder reference point Ph of the tool holder 5 and the tool post origin Ot at the time when the mounted surface is arranged at the indexing position and the attached tool is attached to the tool holder 5. The memory 2M can be regarded as storing a second correlation between the identifier of the mounted surface (the numerical part of the mounting surface ID), the first distance, and the identifier (tool ID) of the attached tool. The memory 2M can be regarded as storing a fourth correlation between the identifier of the mounted surface, the fourth distance, and the identifier of the attached tool.

Further, the direction *DT1* can be regarded as being identical to the X axis direction, and the direction *DT2* can be regarded as being identical to the Z axis direction. In the following description of the embodiment, either the length *Ht* or the length *Wt* that is based on a direction that can be regarded as being identical to the first direction, which is either the direction *DT1* or the direction *DT2,* will be referred to as second distance. That is, the second distance is a distance in the first direction between the tool reference point Pt and the nose ED. Also, either the length *Ht* or the length *Wt* that is based on a direction that can be regarded as being identical to the second direction, which is either the direction *DT1* or the direction *DT2,* will be referred to as fifth distance. That is, the fifth distance is a distance in the second direction between the tool reference point Pt and the nose ED. In this respect, the tool presetter 95 can be regarded as being configured to: obtain the identifier (tool ID) of the tool T; and in a state in which the measured tool, which is the tool T identified by the obtained identifier, is removed from the tool holder 5, measure the second distance for the measured tool. The storage device 90 can be regarded as storing a first correlation between the identifier (tool ID) of the candidate tool (measured tool) attachable to the tool holder 5 and the second distance (one of *Ht* and *Wt)* in the first direction (one of the direction *DT1* and the direction *DT2)* between the holder reference point Ph and the nose ED at the time when the mounted surface is arranged at the indexing position and the candidate tool is attached to the tool holder 5. The storage device 90 can be regarded as storing a third correlation between the identifier (tool ID) of the candidate tool (measured tool) and the fifth distance (the other of *Ht* and *Wt)* in the second direction (the other one of the direction *DT1* and the direction *DT2)* at the time when the candidate tool is attached to the tool holder 5.

While the tool holder 5 is capable of holding the tool T reproducibly, the reproducibility of the surface machining accuracy on the plurality of mounting surfaces is not as high as the reproducibility of the tool holder 5. Therefore, the difference between the maximum value and the minimal value of the first distance among the plurality of mounting surfaces 8 is larger than the range of variation in the distance in the first direction between the holder reference point Ph and the nose ED at the time when the same tool T is attached to the tool holder 5. The difference between the maximum value and the minimal value of the second distance among the plurality of mounting surfaces 8 is larger than the range of variation in the distance in the second direction between the holder reference point Ph and the nose ED at the time when the same tool T is attached to the tool holder 5.

While the tool holder 5 is capable of holding the tool T reproducibly, the reproducibility of the mounting of the tool holder 5 is not as high as the reproducibility of the tool holder 5. Therefore, the range of variation in the position of the holder reference point Ph in the first direction at the time when the tool holder 5 is mounted on the same mounting surface 8 is larger than the range of variation in the distance in the first direction between the holder reference point Ph and the nose ED at the time when the same tool T is attached to the tool holder 5. The range of variation in the position of the holder reference point Ph in the second direction at the time when the tool holder 5 is mounted on the same mounting surface 8 is larger than the range of variation in the distance in the second direction between the holder reference point Ph and the nose ED at the time when the same tool T is attached to the tool holder 5.

Next, a method of inputting the tool ID (the identifier of the attached tool) illustrated in FIG. 11 will be described. The input interface 2IF of the numerical controller 2 includes the above-described known tag reader capable of reading the tag TAG of the tool T. When the operator attaches the tool T to the tool holder 5, the operator inputs a mounting surface ID corresponding to the insertion hole 5h of the tool holder 5 by selecting the mounting surface ID on the control panel 2CP or the input interface 2IF. Then, the operator inputs the tool ID of the attached tool from the tag reader. In this manner, the operator is able to input the tool ID of the attached tool in correlation with the mounting surface ID. There may be a case that a tag reader is built in the turret tool rest to read the attached tool when the operator attaches the attached tool to the mounting surface of the tool post. In this case, if the attached tool does not correspond to the correlation, an alarm may be displayed on the screen.

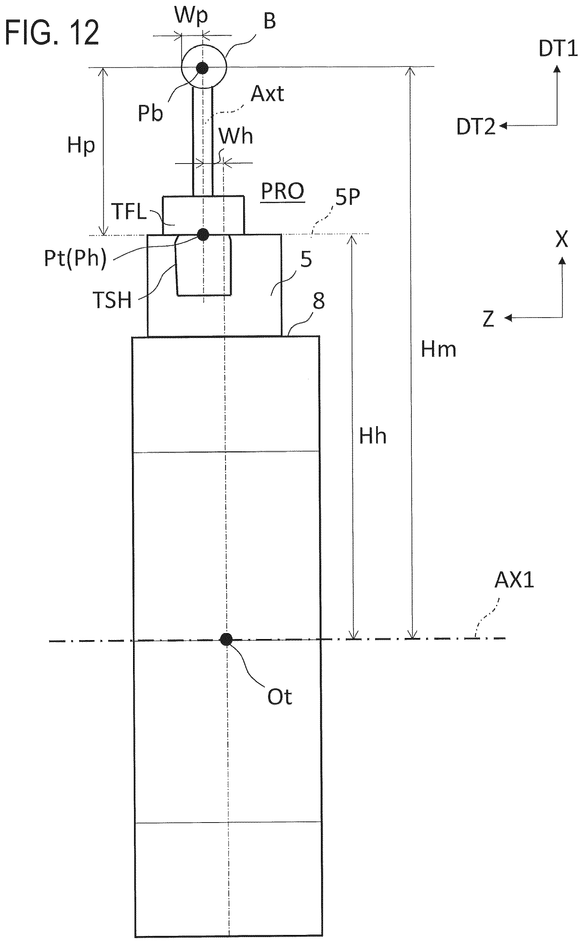

Next, a method of inputting and measuring the distance *Hh* and the distance *Wh* will be described. FIG. 12 is a schematic illustration of a method of measuring the holder reference point Ph of the tool holder 5. As illustrated in FIG. 12, a measurement tool PRO is attached to the tool holder 5. An example of the measurement tool PRO is a probe. The measurement tool PRO has a tool shaft TSH, which is identical in configuration to the tool shaft TSH of the tool T. The measurement tool PRO may further include a tool flange TFL, which includes an engagement groove GV or at least two posture adjustment surfaces OAS. This enables the measurement tool PRO to be attached to the tool holder 5. The measurement tool PRO includes a sphere B at a leading end portion of the measurement tool PRO. A center of the sphere B will be referred to as measurement target Pb. That is, the measurement tool PRO includes the measurement target Pb. The distance, *Hp,* between the measurement target Pb and the tool reference point Pt and the radius, *Wp,* of the sphere are known. By a known method of bringing the sphere B into contact with the workpiece holder 7 or a workpiece having a known shape, the distance, *Hm,* in the X axis direction between the measurement target Pb and the tool post origin Ot and the distance *Wh* in the Z axis direction between the measurement target Pb and the tool post origin Ot are measured. By subtracting the distance *Hp* from the distance *Hm,* the distance *Hh* can be obtained.

That is, the first distance (one of *Hh* and *Wh)* is a value obtained from a measurement value (one of *Hm* and *Wh)* of the distance in the first direction (one of the X axis direction and the Z axis direction) between the measurement target Pb and the tool post origin Ot at the time when the mounted surface, among the plurality of mounting surfaces 8, on which the tool holder 5 is mounted is arranged at the indexing position and the measurement tool PRO is attached to the tool holder 5, and obtained based on a seventh distance (one of *Hp* and distance 0) in the first direction between the holder reference point Ph and the measurement target Pb at the time when the mounted surface is arranged at the indexing position and the measurement tool PRO is attached to the tool holder 5. The fourth distance (the other of *Hh* and *Wh)* is a value obtained from a measurement value (the other one of *Hm* and *Wh)* of the distance in the second direction (the other one of the X axis direction and the Z axis direction) between the measurement target Pb and the tool post origin Ot at the time when the mounted surface, among the plurality of mounting surfaces 8, on which the tool holder 5 is mounted is arranged at the indexing position and the measurement tool PRO is attached to the tool holder 5, and obtained based on an eighth distance in the second direction (the other one of *Hp* and distance 0) between the holder reference point Ph and the measurement target Pb at the time when the mounted surface is arranged at the indexing position and the measurement tool PRO is attached to the tool holder 5.

The operator inputs the mounting surface ID corresponding to the insertion hole 5h of the tool holder 5 by selecting the mounting surface ID on the control panel 2CP or the input interface 2IF. Then, the operator inputs the above-described measurement result. In this manner, the operator is able to the distance *Hh* and the distance *Wh* in correlation with the mounting surface ID. It is to be noted that the measurement tool PRO will not be limited to the above-described probe but may be a tool T having a known length *Ht* and a known length *Wt.* In this case, it is possible to measure the distance in the X axis direction between the nose ED of the known tool T and the tool post origin Ot and the distance in the Z axis direction using a gauge or a similar device and subtract the length *Ht* and the length *Wt* from the measurement result. In this manner, the distance *Hh* and the distance *Wh* may be measured. In this example, in a case that the distance *Hh* is the first distance, the known length *Ht* may be referred to as the seventh distance, and the known length *Wt* may be referred to as the eighth distance. In a case that the distance *Wh* is the first distance, the known length *Wt* may be referred to as the seventh distance, and the known length *Ht* may be referred to as the eighth distance.

Next, description will be made with regard to a method of estimating the position of the nose ED of the tool T performed by executing the position calibration program 42. The processor 2P, which executes the position calibration program 42, performs processing of obtaining the tool ID (the identifier of the attached tool) of the mounting surface data 45 via the tag reader (the input interface 2IF). Next, the processor 2P performs processing of obtaining, from the storage device 90, lengths *Ht* and *Wt* (second distance and fifth distance) corresponding to the identifier (the tool ID of the tool data 46) of the candidate tool (measured tool) that is identical to the identifier of the attached tool. After the obtaining processing, the memory 2M may store the tool data 46. Next, the processor 2P obtains, from the T code number described in the machining program 41, the identifier (the numerical part of the mounting surface ID) of the mounting surface 8 arranged at the indexing position. Next, the processor 2P determines, from the mounting surface data 45, the distances *Hh* and *Wh* and the identifier (tool ID) of the attached tool based on the obtained identifier of the mounting surface. Based on the obtained length *Ht* and the distance *Hh* in the mounting surface data 45, the processor 2P performs processing of estimating the distance, *Ht + Hh,* in the X axis direction between the tool post origin Ot and the nose ED of the attached tool. Lastly, based on the obtained length *Wt* and the distance *Wh* in the mounting surface data 45, the processor 2P performs processing of estimating the distance, *Wt + Wh,* in the Z axis direction between the tool post origin Ot and the nose ED of the attached tool. In a case that the distance *Hh* is the first distance and the length *Ht* is the second distance, the distance *Ht + Hh* will be referred to third distance. In a case that the distance *Wh* is the fourth distance and the length *Wt* is the fifth distance, the distance *Wt + Wh* will be referred to sixth distance. In a case that the distance *Wh* is the first distance and the length *Wt* is the second distance, the distance *Wt + Wh* will be referred to third distance. In a case that the distance *Hh* is the fourth distance and the length *Ht* is the fifth distance, the distance *Ht + Hh* will be referred to sixth distance. The processor 2P, which executes the machining program 41, controls the actuator 6 based on the third distance and the sixth distance.

### <Flow of Processing of Method of Estimating Nose Position in Lathe 1>

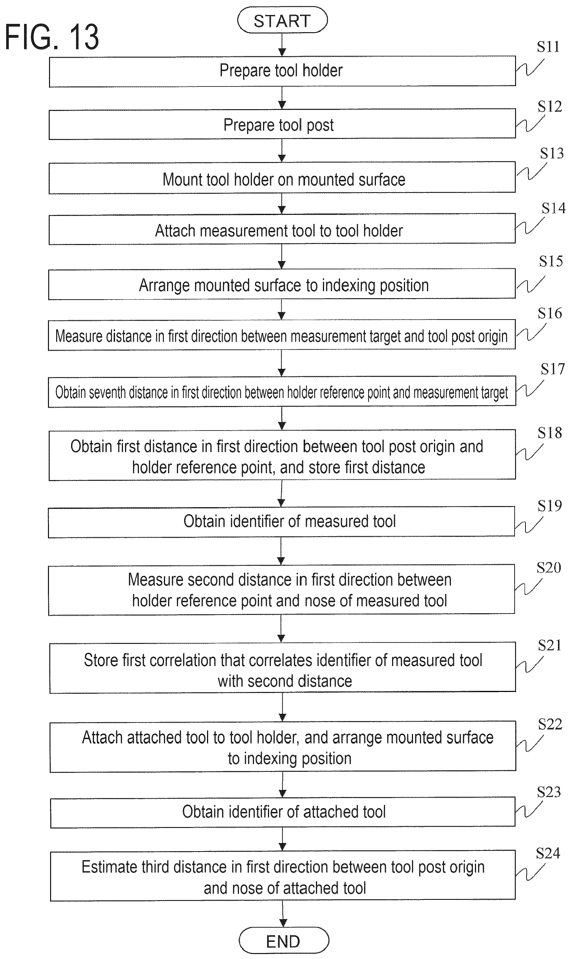

Next, the method of estimating the nose position in the lathe 1 will be described. FIG. 13 is a flowchart of processing of the method of estimating the nose position in the lathe 1. Referring to FIG. 13, at step S11 of the method, a tool holder 5 is prepared which has a holder reference point Ph and to which a tool T having a nose ED is attachable. At step S12 of the method, a tool post 4 is prepared which has a tool post origin Ot and includes a plurality of mounting surfaces 8. At step S13 of the method, the tool holder 5 is mounted on a mounted surface among the plurality of mounting surfaces 8. At step S14 of the method, the measurement tool PRO, which has the measurement target Pb, is attached to the tool holder 5. At step S15 of the method, the tool post 4 is moved to arrange the above-described mounted surface to the indexing position. At step S16 of the method, the distance (in the example illustrated in FIG. 12, one of the distance *Hm* and the distance *Wh)* in the first direction (one of the X axis direction and the Z axis direction) between the measurement target Pb and the tool post origin Ot is measured. At step S16, it is also possible to measure the distance (in the example illustrated in FIG. 12, the other one of the distance *Hm* and the distance *Wh)* in the second direction (the other one of the X axis direction and the Z axis direction) between the measurement target Pb and the tool post origin Ot.

At step S17 of the method, the seventh distance (in the example illustrated in FIG. 12, one of *Hp* and distance 0) in the first direction (one of the X axis direction and the Z axis direction) between the holder reference point Ph and the measurement target Pb at the time when the mounted surface is arranged at the indexing position and the measurement tool PRO is attached to the tool holder 5 is obtained. This obtaining processing means to obtain known dimension data pf the measurement tool PRO. At step S18 of the method, based on the measured distance (in the example illustrated in FIG. 12, one of the distance *Hm* and the distance *Wh)* and the seventh distance (in the example illustrated in FIG. 12, one of *Hp* and distance 0), the first distance (one of *Hh* and *Wh)* in the first direction (one of the X axis direction and the Z axis direction) between the tool post origin Ot and the holder reference point Ph is obtained. The first distance is stored in the memory 2M. At step S18 of the method, based on the measured distance (in the example illustrated in FIG. 12, the other one of the distance *Hm* and the distance *Wh)* and the eighth distance (in the example illustrated in FIG. 12, the other one of *Hp* and distance 0), the fourth distance (the other of *Hh* and *Wh)* in the second direction (the other one of the X axis direction and the Z axis direction) between the tool post origin Ot and the holder reference point Ph may be obtained. The fourth distance may be stored in the memory 2M.

At step S19 of the method, the tool presetter 95 obtains the identifier (tool ID) of the measured tool. At step S20 of the method, the tool presetter 95 measures the second distance (one of *Ht* and *Wt)* in the first direction (one of the X axis direction and the Z axis direction) between the holder reference point Ph and the nose ED of the measured tool at the time when the mounted surface is arranged at the indexing position and the measured tool is attached to the tool holder 5. At step S20, the tool presetter 95 may measure the fifth distance (the other of *Ht* and *Wt)* in the second direction (the other one of the X axis direction and the Z axis direction) between the holder reference point Ph and the nose ED of the measured tool at the time when the mounted surface is arranged at the indexing position and the measured tool is attached to the tool holder 5.

At step S21 of the method, the storage device 90 stores a first correlation that correlates the identifier (tool ID) of the measured tool with the second distance (one of *Ht* and *Wt).* At step S21, the storage device 90 may store a third correlation that correlates the identifier (tool ID) of the measured tool with the fifth distance (the other of *Ht* and *Wt).*

At step S22 of the method, the attached tool is attached to the tool holder 5. The mounted surface is arranged to the indexing position. At step S23 of the method, the lathe 1 obtains the identifier (tool ID) of the attached tool. At step S24 of the method, the processor 2P, which executes the position calibration program 42, obtains a second distance (one of *Ht* and *Wt)* corresponding to the identifier of the measured tool that is identical to the identifier of the attached tool. Then, based on the obtained second distance and the first distance (one of *Hh* and *Wh),* the processor 2P estimates a third distance (one of *Hh + Ht* and *Wh + Wt)* in the first direction (one of the X axis direction and the Z axis direction) between the tool post origin Ot and the nose ED of the attached tool. At step S24, the processor 2P may obtain a fifth distance (the other of *Ht* and *Wt)* corresponding to the identifier of the measured tool that is identical to the identifier of the attached tool. Then, based on the obtained fifth distance and the fourth distance (the other of *Hh* and *Wh*), the processor 2P may estimate a sixth distance (the other one of *Hh + Ht* and *Wh + Wt*) in the second direction (the other one of the X axis direction and the Z axis direction) between the tool post origin Ot and the nose ED of the attached tool.

### <Features and Effects of Lathe Machining System According to This Embodiment and Method According to This Embodiment of Estimating Nose Position in Lathe 1>

The lathe 1 according to this embodiment, the lathe machining system 100 according to this embodiment, and the method according to this embodiment of estimating the nose position in the lathe 1 obtain the identifier of the attached tool; obtain, from the storage device 90, a second distance corresponding to the identifier of the candidate tool that is identical to the identifier of the attached tool, the storage device 90 storing the first correlation between the identifier of the candidate tool attachable to the tool holder 5 and the second distance in the first direction between the holder reference point Ph and the nose ED at the time when the mounted surface is arranged at the indexing position and the candidate tool is attached to the tool holder 5; and based on the obtained second distance and the first distance, estimate the third distance in the first direction between the tool post origin Ot and the nose ED of the attached tool. This shortens the arrangement time for measuring the tool length for measuring position misalignments of positions of noses of a plurality of tools.

### <Second Embodiment>

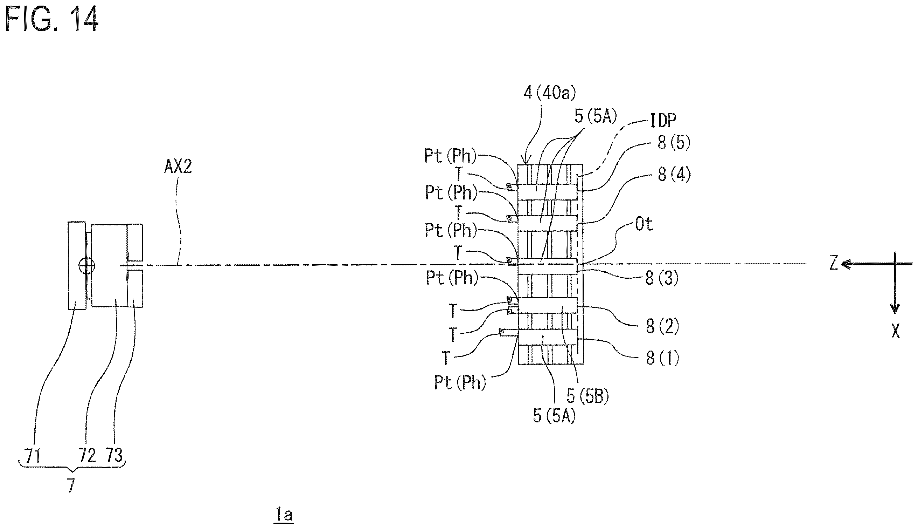

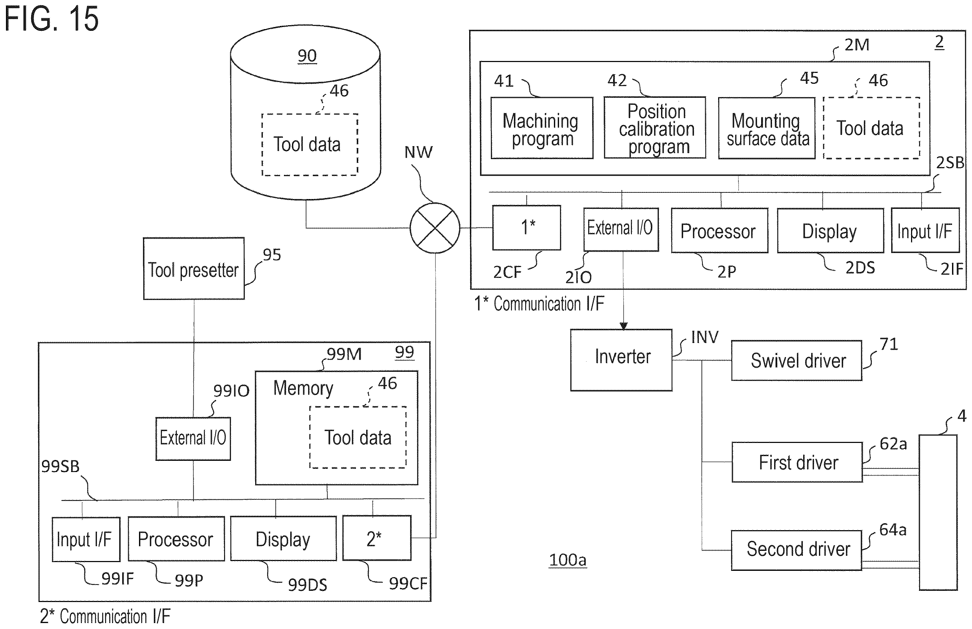

FIG. 14 illustrates a schematic configuration of main parts of a lathe 1a according to the second embodiment. FIG. 15 is a block diagram of a hardware configuration of a lathe machining system 100a according to the second embodiment. The configuration of the second embodiment shares many similarities with the configuration of the first embodiment. Therefore, the following description will focus solely on the differences, and the shared similarities will be omitted from the description.

As illustrated in FIG. 14, in the lathe 1a according to the second embodiment, a plurality of tools T are attached to the tool post 4 in a comb-shaped configuration. The tool post 4 is moved in XZ directions to bring the plurality of tools T into contact with the workpiece, machining the workpiece. In this embodiment, the tool post 4 of this kind will be referred to the comb-tooth tool post 40a. In FIG. 14, a workpiece holder 7 is illustrated. This workpiece holder 7 is identical in configuration to the workpiece holder 7 according to the first embodiment. The Z axis direction preferably extends along the rotation axis, AX2, of the workpiece holder 7, and the X axis direction is preferably oriented in a vertical direction relative to the rotation axis AX2 of the workpiece holder 7. The configuration of lathe machining system 100a is identical in large part to the configuration of the lathe machining system 100. In the lathe machining system 100a, however, the swivel driver 60 is omitted; a first driver 62a is configured to drive the comb-tooth tool post 40a in the X axis direction; and a second driver 64a is configured to drive the comb-tooth tool post 40a in the Z axis direction.

In this configuration, tool holders 5 are respectively fitted in a plurality of grooves of the comb-tooth tool post 40a. As illustrated in FIG. 14, innermost surfaces of the plurality of grooves can be regarded as a plurality of mounting surfaces 8. The number in parentheses following the reference symbol of each mounting surface indicates the station number described above. As illustrated in FIG. 14, the plurality of mounting surfaces 8 are provided on an identical plane IDP. A tool post origin Ot of the comb-tooth tool post 40a is determined for each lathe 1a. On each mounting surface 8, the single holder 5A or the double holder 5B, which is capable of holding a plurality of tools T, can be mounted. In the first embodiment, the direction *DT1* is set to be approximately identical to the X axis direction, and the direction *DT2* is set to be approximately identical to the Z axis direction. In the second embodiment, however, the direction *DT1* is set to be approximately identical to the Z axis direction, and the direction *DT2* is set to be approximately identical to the X axis direction. In this embodiment, the posture of the comb-tooth tool post 40a remains unchanged. Therefore, the mounted surface, among the plurality of mounting surfaces 8, on which the tool holder 5 is mounted, may be regarded as being arranged at the indexing position.

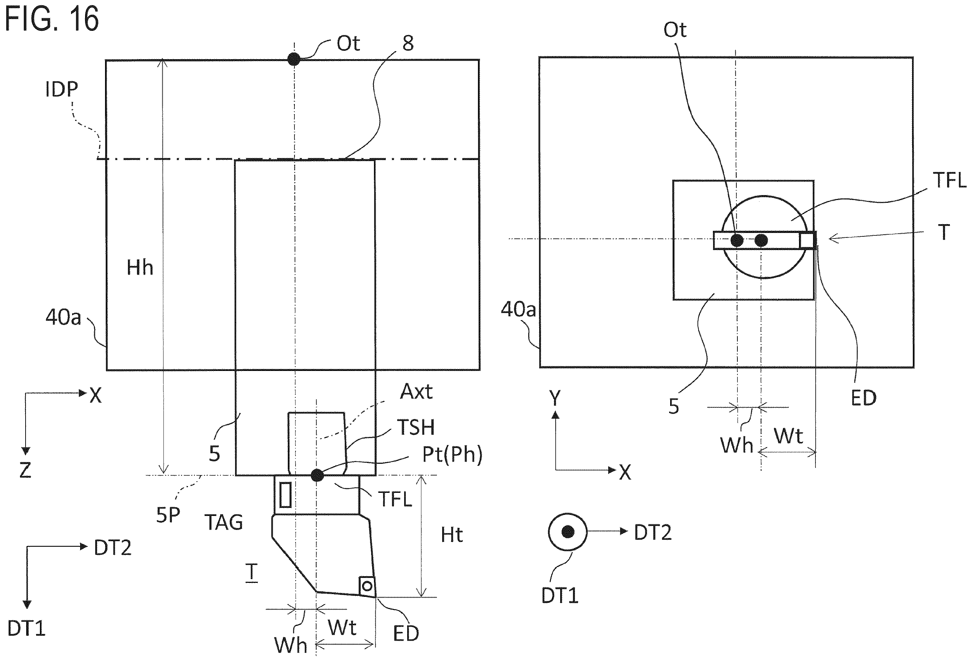

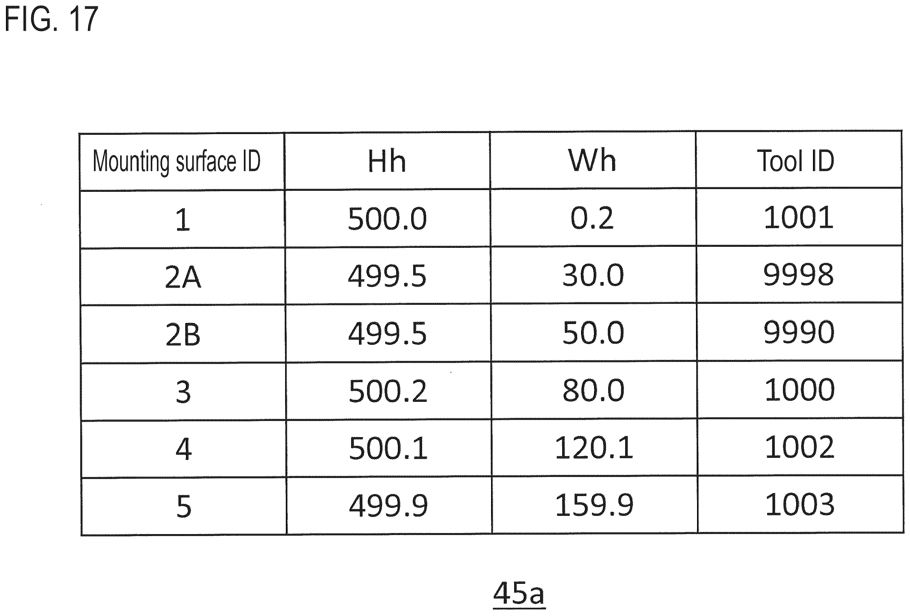

FIG. 16 is a schematic illustration of dimensions of the tool holder 5 according to the second embodiment and dimensions of the tool post 4 (the comb-tooth tool post 40a) according to the second embodiment. FIG. 17 illustrates an example of the mounting surface data 45a according to the second embodiment. Referring to FIGs. 16 and 17, the distance of the holder reference point Ph relative to the tool post origin Ot in the X direction is represented as *Wh,* and the distance of the holder reference point Ph relative to the tool post origin Ot in the Z direction is represented as *Hh.* These values can be obtained by the methods described in the first embodiment. As illustrated in FIG. 17, in this embodiment as well, there may be a case that the double holder 5B is mounted, as indicated by the suffix attached to the mounting surface ID. In this embodiment, the first direction can be regarded as one of the X axis direction and the Z axis direction, and the second direction can be regarded as the other one of the X axis direction and the Z axis direction. Therefore, the first direction is a normal direction of the identical plane IDP or a direction perpendicular to the normal direction. The second direction is the normal direction of the identical plane IDP or a direction perpendicular to the normal direction. In this respect, the processor 2P, which executes the position calibration program 42, is able to estimate the distance *Hh + Ht* in the Z direction between the tool post origin Ot and the nose ED based on the distance *Hh* and the length *Ht.* In this respect, the processor 2P, which executes the position calibration program 42, is able to estimate the distance *Wh + Wt* in the X direction between the tool post origin Ot and the nose ED based on the distance *Wh* and the length *Wt.*

It is to be noted that in the comb-tooth tool post 40a, the model illustrated in the right half of FIG. 16 has no deviation between the nose ED and the tool post origin Ot in the Y axis, which is perpendicular to the X axis. It is also possible, however, to take a deviation in the Y axis direction into consideration. Another possible example is to define the X axis as an axis extending in a direction from the Z axis toward the nose ED.

### <Modifications>

At least one or all of the functions of the logic of the position calibration program 42 may be implemented by a dedicated processor and/or an integrated circuit. The position calibration program 42 may not necessarily be stored in the memory 2M, but may be recorded in a disc (disk) such as a floppy disk, an optical disc, a CD-ROM, and a magnetic disc; or a storage medium, such as an SD card, a USB memory, and external hard disc, that is removable from the numerical controller 2 and readable by the numerical controller 2.

In the present application, the term "comprise" and its variations are intended to mean open-ended terms, not excluding any other elements and/or components that are not recited herein. The same applies to the terms "include", "have", and their variations.

Also in the present application, a component suffixed with a term such as "member", "portion", "part", "element", "body", and "structure" is intended to mean that there is a single such component or a plurality of such components.

Also in the present application, ordinal terms such as "first" and "second" are merely used for distinguishing purposes and there is no other intention (such as to connote a particular order) in using ordinal terms. For example, the mere use of "first element" does not connote the existence of "second element"; otherwise, the mere use of "second element" does not connote the existence of "first element".

In the present disclosure, approximating language such as "approximately", "about", and "substantially" may be applied to modify any quantitative representation that could permissibly vary without a significant change in the final result obtained. All of the quantitative representations recited in the present application shall be construed to be modified by approximating language such as "approximately", "about", and "substantially".

Also in the present application, the phrase "at least one of A and B" is intended to be interpreted as "only A", "only B", or "both A and B".

## Claims

1. A lathe (1) comprising:
a tool holder (5) which has a holder reference point (Ph) and to which a tool (T) having a tool nose (ED) is attachable, the holder reference point (Ph) being a reference point related to the tool holder (5) and the tool (T);
a tool post (4) having a tool post origin (Ot), which is a reference point related to the tool post (4), and having a plurality of mounting surfaces (8), wherein the tool holder (5) is a component being separate from the tool post (4) and selectively and detachably mountable on the plurality of mounting surfaces (8) of the tool post (4);
an actuator (6) configured to move the tool post (4) to arrange each mounting surface of the plurality of mounting surfaces (8) to an indexing position; and
a numerical controller (2) configured to control the actuator (6), the numerical controller (2) comprising:
a memory (2M) configured to store a first distance in a first direction between the holder reference point (Ph) of the tool holder (5) and the tool post origin (Ot) at a time when a mounted surface, among the plurality of mounting surfaces (8), on which the tool holder (5) is mounted is arranged at the indexing position and an attached tool is attached to the tool holder (5); and
a processor (2P) configured to:
obtain an identifier of the attached tool;
obtain, from a storage device (90) , a second distance in the first direction between the holder reference point (Ph) and the tool nose (ED) at a time when the mounted surface is arranged at the indexing position and a candidate tool attachable to the tool holder (5) is attached to the tool holder (5), the storage device (90) storing a first correlation between an identifier of the candidate tool and the second distance, the obtained second distance corresponding to the identifier of the candidate tool that is identical to the identifier of the attached tool; and
based on the obtained second distance and the first distance, estimate a third distance in the first direction between the tool post origin (Ot) and the tool nose (ED) of the attached tool to control the actuator (6) based on the third distance.

2. The lathe (1) according to claim 1,
wherein when the tool (T) is attached to the tool holder (5), the tool (T) has a tool reference point (Pt) that is substantially identical to the holder reference point (Ph), and
wherein the second distance is a distance in the first direction between the tool reference point (Pt) and the tool nose (ED).

3. The lathe (1) according to claim 1 or 2, wherein the tool post (4) is a turret (40).

4. The lathe (1) according to claim 3, wherein a difference between a maximum value and a minimal value of the first distance among the plurality of mounting surfaces (8) is larger than a range of variation in a distance in the first direction between the holder reference point (Ph) and the tool nose (ED) at a time when an identical tool is attached to the tool holder (5).

5. The lathe (1) according to claim 4, wherein a range of variation in a position of the holder reference point (Ph) in the first direction at a time when the tool holder (5) is mounted on an identical mounting surface is larger than the range of variation in the distance in the first direction between the holder reference point (Ph) and the tool nose (ED) at the time when the identical tool is attached to the tool holder (5).

6. The lathe (1) according to any one of claims 3 to 5,
wherein the tool post (4) is rotatable about a rotation axis (AX1) passing through the tool post origin (Ot), and
wherein the first direction is a direction perpendicular to the rotation axis (AX1) or a direction parallel to the rotation axis (AX1).

7. The lathe (1) according to claim 6, further comprising a workpiece holder (7) configured to hold a workpiece rotatably about a workpiece rotation axis (AX2) parallel to the rotation axis (AX1),
wherein the first direction is a direction perpendicular to the rotation axis (AX1) and the workpiece rotation axis (AX2).

8. The lathe (1) according to claim 1 or 2, wherein the plurality of mounting surfaces (8) are provided on an identical plane (IDP).

9. The lathe (1) according to claim 8, wherein the first direction is a normal direction of the identical plane (IDP) or a direction perpendicular to the normal direction.

10. The lathe (1) according to any one of claims 1 to 9,
wherein the memory (2M) is configured to store a fourth distance in a second direction orthogonal to the first direction between the holder reference point (Ph) of the tool holder (5) and the tool post origin (Ot) at the time when the mounted surface is arranged at the indexing position and the attached tool is attached to the tool holder (5), and
wherein the processor (2P) is configured to:
obtain, from the storage device (90), a fifth distance in the second direction at a time when the candidate tool is attached to the tool holder (5), the storage device (90) storing a third correlation between the identifier of the candidate tool and the fifth distance, the fifth distance corresponding to the identifier of the candidate tool that is identical to the identifier of the attached tool; and
based on the obtained fifth distance and the fourth distance, estimate a sixth distance between the tool post origin (Ot) and the tool nose (ED) of the attached tool to control the actuator (6) based on the sixth distance.

11. The lathe (1) according to any one of claims 1 to 10,
wherein the tool (T) has a tool center axis (Axt),
wherein the tool holder (5) has a target center axis (Atar),
wherein the tool holder (5) includes
one of a guide surface (GINGS) and a guided surface (GEDS) guided by the guide surface (GINGS), the guide surface (GINGS) extending along the target center axis (Axt) in an insertion direction from one of the tool holder (5) and the tool (T) toward the other one of the tool holder (5) and the tool (T) and gradually approaching the target center axis (Atar) along the insertion direction so that the tool center axis (Axt) substantially share a common axis with the target center axis (Atar), and
one of at least two posture adjustment surfaces (OAS) or at least two contact surfaces (CONS) contacting the at least two posture adjustment surfaces (OAS), the at least two posture adjustment surfaces (OAS) crossing a circumferential direction centered around the common axis, and
one of an engagement jaw (EC) and an engagement groove (GV) provided around the common axis and engageable with the engagement jaw (EC), the engagement jaw (EC) being configured to regulate or deregulate movement of the tool (T) in the insertion direction and a withdrawal direction opposite to the insertion direction, and
wherein the tool (T) includes
the other one of the guide surface (GINGS) and the guided surface (GEDS),
the other one of the at least two posture adjustment surfaces (OAS) and the at least two contact surfaces (CONS), and
the other one of the engagement jaw (EC) and the engagement groove (EV).

12. The lathe (1) according to any one of claims 1 to 11,
wherein a measurement tool (PRO) having a measurement target (Pb) is attachable to the tool holder (5), and
wherein the first distance is a value obtained from a measurement value of a distance in the first direction between the measurement target (Pb) and the tool post origin (Ot) in a state in which the mounted surface is arranged at the indexing position and the measurement tool (PRO) is attached to the tool holder (5), and obtained based on a seventh distance in the first direction between the holder reference point (Ph) and the measurement target (Pb) at a time when the mounted surface is arranged at the indexing position and the measurement tool (PRO) is attached to the tool holder (5).

13. The lathe (1) according to any one of claims 1 to 12,
wherein the memory (2M) is configured to store a second correlation between an identifier of the mounted surface, the first distance, and the identifier of the attached tool, and
wherein the processor (2P) is configured to:
obtain an identifier of a mounting surface arranged at the indexing position; and
determine the first distance and the identifier of the attached tool based on the obtained identifier of the mounting surface.

14. A lathe machining system (100) comprising:
the lathe (1) according to claim 13;
a tool presetter (95) configured to:
obtain a tool identifier; and
measure the second distance for a measured tool identified by the obtained tool identifier in a state in which the measured tool is removed from the tool holder (5);
a network (NW) via which the numerical controller (2) and the tool presetter (95) communicate with each other; and
the storage device (90) connected to the network (NW),
wherein the storage device (90) is configured to store the first correlation such that the first correlation correlates the identifier of the measured tool with data indicating the measured second distance, and
wherein the processor (2P) is configured to obtain the second distance such that the second distance corresponds to the identifier of the measured tool that is identical to the identifier of the attached tool.

15. A method of estimating a nose position in a lathe (1), the method comprising:
preparing (S11) a tool holder (5) which has a holder reference point (Ph) and to which a tool (T) having a tool nose (ED) is attachable, the holder reference point (Ph) being a reference point related to the tool holder (5) and the tool (T);
preparing (S12) a tool post (4) having a tool post origin (Ot), which is a reference point related to the tool post (4), and having a plurality of mounting surfaces (8), wherein the tool holder (5) is a component being separate from the tool post (4) and selectively and detachably mountable on the plurality of mounting surfaces (8) of the tool post (4);
mounting (S13) the tool holder (5) on a mounted surface among the plurality of mounting surfaces (8);
attaching (S14), to the tool holder (5), a measurement tool (PRO) having a measurement target (Pb);
moving (S15) the tool post (4) to arrange the mounted surface to an indexing position;
measuring (S16) a distance in a first direction between the measurement target (Pb) and the tool post origin (Ot);
obtaining (S17) a seventh distance in the first direction between the holder reference point (Ph) and the measurement target (Pb) at a time when the mounted surface is arranged at the indexing position and the measurement tool (PRO) is attached to the tool holder (5);
based on the measured distance and the seventh distance, obtaining (S18) a first distance in the first direction between the tool post origin (Ot) and the holder reference point (Ph) and storing the first distance;
obtaining (S19) an identifier of a measured tool;
measuring (S20) a second distance in the first direction between the holder reference point (Ph) and the tool nose (ED) of the measured tool at a time when the mounted surface is arranged at the indexing position and the measured tool is attached to the tool holder (5);
storing (S21) a first correlation that correlates the identifier of the measured tool with the second distance;
attaching (S22) an attached tool to the tool holder (5) to arrange the mounted surface at the indexing position;
obtaining (S23) an identifier of the attached tool; and
obtaining the second distance such that the second distance corresponds to the identifier of the measured tool that is identical to the identifier of the attached tool, and estimating (S24) a third distance in the first direction between the tool post origin (Ot) and the tool nose (ED) of the attached tool based on the obtained second distance and the first distance.

## Patentansprüche

1. Drehmaschine (1) mit:
einer Werkzeughalteeinrichtung (5), die einen Halteeinrichtungsreferenzpunkt (Ph) aufweist und an die ein Werkzeug (T) mit einer Werkzeugschneidenecke (ED) anbringbar ist, wobei der Halteeinrichtungsreferenzpunkt (Ph) ein Referenzpunkt ist, der auf die Werkzeughalteeinrichtung (5) und das Werkzeug (T) bezogen ist;
einem Werkzeugschnellwechsler (4), der einen Werkzeugschnellwechslerursprung (Ot) aufweist, der ein Referenzpunkt ist, der auf den Werkzeugschnellwechsler (4) bezogen ist, und eine Vielzahl von Montageoberflächen (8) aufweist, wobei die Werkzeughalteeinrichtung (5) eine Komponente ist, die von dem Werkzeugschnellwechsler (4) getrennt ist und an der Vielzahl von Montageoberflächen (8) des Werkzeugschnellwechslers (4) selektiv und abnehmbar montierbar ist;
einer Betätigungseinrichtung (6), die konfiguriert ist, den Werkzeugschnellwechsler (4) zu bewegen, um jede Montageoberfläche der Vielzahl von Montageoberflächen (8) bei einer Indizierungsposition anzuordnen; und
einer numerischen Steuerungseinrichtung (2), die konfiguriert ist, die Betätigungseinrichtung (6) zu steuern, wobei die numerische Steuerungseinrichtung (2) umfasst:
einen Speicher (2M), der konfiguriert ist, eine erste Entfernung in einer ersten Richtung zwischen dem Halteeinrichtungsreferenzpunkt (Ph) der Werkzeughalteeinrichtung (5) und dem Werkzeugschnellwechslerursprung (Ot) zu einer Zeit zu speichern, wenn eine montierte Oberfläche unter der Vielzahl von Montageoberflächen (8), an der die Werkzeughalteeinrichtung (5) angebracht ist, bei der Indizierungsposition angeordnet ist und ein angebrachtes Werkzeug an der Werkzeughalteeinrichtung (5) angebracht ist; und
eine Verarbeitungseinrichtung (2P), die konfiguriert ist:
ein Identifikationselement des angebrachten Werkzeugs zu erhalten;
von einer Speichervorrichtung (90) eine zweite Entfernung in der ersten Richtung zwischen dem Halteeinrichtungsreferenzpunkt (Ph) und der Werkzeugschneidenecke (ED) zu einer Zeit zu erhalten, wenn die montierte Oberfläche bei der Indizierungsposition angeordnet ist und ein Kandidatenwerkzeug, das an der Werkzeughalteeinrichtung (5) anbringbar ist, bei der Werkzeughalteeinrichtung (5) angebracht ist, wobei die Speichervorrichtung (90) eine erste Wechselbeziehung zwischen einem Identifikationselement des Kandidatenwerkzeugs und der zweiten Entfernung speichert, wobei die erhaltene zweite Entfernung dem Identifikationselement des Kandidatenwerkzeugs entspricht, das identisch zu dem Identifikationselement des angebrachten Werkzeugs ist; und
auf der Grundlage der erhaltenen zweiten Entfernung und der ersten Entfernung eine dritte Entfernung in der ersten Richtung zwischen dem Werkzeugschnellwechslerursprung (Ot) und der Werkzeugschneidenecke (ED) des angebrachten Werkzeugs zu schätzen, um die Betätigungseinrichtung (6) auf der Grundlage der dritten Entfernung zu steuern.

2. Drehmaschine (1) nach Anspruch 1,
wobei, wenn das Werkzeug (T) an der Werkzeughalteeinrichtung (5) angebracht ist, das Werkzeug (T) einen Werkzeugreferenzpunkt (Pt) aufweist, der im Wesentlichen identisch zu dem Halteeinrichtungsreferenzpunkt (Ph) ist, und
wobei die zweite Entfernung eine Entfernung in der ersten Richtung zwischen dem Werkzeugreferenzpunkt (Pt) und der Werkzeugschneidenecke (ED) ist.

3. Drehmaschine (1) nach Anspruch 1 oder 2, wobei der Werkzeugschnellwechsler (4) ein Turm (40) ist.

4. Drehmaschine (1) nach Anspruch 3, wobei eine Differenz zwischen einem maximalen Wert und einem minimalen Wert der ersten Entfernung unter der Vielzahl von Montageoberflächen (8) größer ist als ein Variationsbereich einer Entfernung in der ersten Richtung zwischen dem Halteeinrichtungsreferenzpunkt (Ph) und der Werkzeugschneidenecke (ED) zu einer Zeit, wenn ein identisches Werkzeug an der Werkzeughalteeinrichtung (5) angebracht ist.

5. Drehmaschine (1) nach Anspruch 4, wobei ein Variationsbereich einer Position des Halteeinrichtungsreferenzpunkts (Ph) in der ersten Richtung zu einer Zeit, wenn die Werkzeughalteeinrichtung (5) an einer identischen Montageoberfläche montiert ist, größer ist als der Variationsbereich der Entfernung in der ersten Richtung zwischen dem Halteeinrichtungsreferenzpunkt (Ph) und der Werkzeugschneidenecke (ED) zu der Zeit, wenn das identische Werkzeug an der Werkzeughalteeinrichtung (5) angebracht ist.

6. Drehmaschine (1) nach einem der Ansprüche 3 bis 5,
wobei der Werkzeugschnellwechsler (4) um eine Drehachse (AX1) drehbar ist, die durch den Werkzeugschnellwechslerursprung (Ot) hindurch geht, und
wobei die erste Richtung eine Richtung ist, die senkrecht zu der Drehachse (AX1) ist, oder eine Richtung ist, die parallel zu der Drehachse (AX1) ist.

7. Drehmaschine (1) nach Anspruch 6, ferner mit einer Werkstückhalteeinrichtung (7), die konfiguriert ist, ein Werkstück drehbar um eine Werkstückdrehachse (AX2) zu halten, die parallel zu der Drehachse (AX1) ist,
wobei die erste Richtung eine Richtung ist, die senkrecht zu der Drehachse (AX1) und der Werkstückdrehachse (AX2) ist.

8. Drehmaschine (1) nach Anspruch 1 oder 2, wobei die Vielzahl von Montageoberflächen (8) auf einer identischen Ebene (IDP) bereitgestellt ist.

9. Drehmaschine (1) nach Anspruch 8, wobei die erste Richtung eine Normalenrichtung der identischen Ebene (IDP) oder eine Richtung, die senkrecht zu der Normalenrichtung ist, ist.

10. Drehmaschine (1) nach einem der Ansprüche 1 bis 9,
wobei der Speicher (2M) konfiguriert ist, eine vierte Entfernung in einer zweiten Richtung, die orthogonal zu der ersten Richtung ist, zwischen dem Halteeinrichtungsreferenzpunkt (Ph) der Werkzeughalteeinrichtung (5) und dem Werkzeugschnellwechslerursprung (Ot) zu der Zeit zu speichern, wenn die montierte Oberfläche bei der Indizierungsposition angeordnet ist und das angebrachte Werkzeug an der Werkzeughalteeinrichtung (5) angebracht ist, und
wobei die Verarbeitungseinrichtung (2P) konfiguriert ist:
von der Speichervorrichtung (90) eine fünfte Entfernung in der zweiten Richtung zu der Zeit, wenn das Kandidatenwerkzeug an der Werkzeughalteeinrichtung (5) angebracht ist, zu erhalten, wobei die Speichervorrichtung (90) eine dritte Wechselbeziehung zwischen dem Identifikationselement des Kandidatenwerkzeugs und der fünften Entfernung speichert, wobei die fünfte Entfernung dem Identifikationselement des Kandidatenwerkzeugs entspricht, das identisch zu dem Identifikationselement des angebrachten Werkzeugs ist; und
auf der Grundlage der erhaltenen fünften Entfernung und der vierten Entfernung eine sechste Entfernung zwischen dem Werkzeugschnellwechslerursprung (Ot) und der Werkzeugschneidenecke (ED) des angebrachten Werkzeugs zu schätzen, um die Betätigungseinrichtung (6) auf der Grundlage der sechsten Entfernung zu steuern.

11. Drehmaschine (1) nach einem der Ansprüche 1 bis 10,
wobei das Werkzeug (T) eine Werkzeugmittelachse (Axt) aufweist,
wobei die Werkzeughalteeinrichtung (5) eine Zielmittelachse (Atar) aufweist,
wobei die Werkzeughalteeinrichtung (5)
eine aus einer Führungsoberfläche (GINGS) und einer geführten Oberfläche (GEDS), die durch die Führungsoberfläche (GINGS) geführt wird, wobei sich die Führungsoberfläche (GINGS) entlang der Zielmittelachse (Axt) in einer Einführrichtung von einem aus der Werkzeughalteeinrichtung (5) und dem Werkzeug (T) hin zu dem anderen aus der Werkzeughalteeinrichtung (5) und dem Werkzeug (T) erstreckt und sich allmählich der Zielmittelachse (Atar) entlang der Einführrichtung annähert, sodass die Werkzeugmittelachse (Axt) im Wesentlichen eine gemeinsame Achse mit der Zielmittelachse (Atar) teilt, und
eines von zumindest zwei Stellungsjustieroberflächen (OAS) oder zumindest zwei Kontaktoberflächen (CONS), die die zumindest zwei Stellungsjustierungsoberflächen (OAS) kontaktieren, wobei die zumindest zwei Stellungsjustieroberflächen (OAS) eine Umfangsrichtung, die um die gemeinsame Achse herum zentriert ist, kreuzen, und
eine aus einer Eingriffsklaue (EC) und einer Eingriffsnut (GV), die um die gemeinsame Achse herum bereitgestellt ist und mit der Eingriffsklaue (EC) in Eingriff gebracht werden kann, wobei die Eingriffsklaue (EC) konfiguriert ist, eine Bewegung des Werkzeugs (T) in der Einführrichtung und einer Entnahmerichtung, die zu der Einführrichtung entgegengesetzt ist, zu regulieren oder freizugeben, umfasst, und
wobei das Werkzeug (T)
die andere der Führungsoberfläche (GINGS) und der geführten Oberfläche (GEDS),
die anderen der zumindest zwei Stellungsjustierungsoberflächen (OAS) und der zumindest zwei Kontaktoberflächen (CONS) und
die andere der Eingriffsklaue (EC) und der Eingriffsnut (EV) umfasst.

12. Drehmaschine (1) nach einem der Ansprüche 1 bis 11,
wobei ein Messwerkzeug (PRO), das ein Messziel (Pb) aufweist, an der Werkzeughalteeinrichtung (5) anbringbar ist, und
wobei die erste Entfernung ein Wert ist, der aus einem Messwert einer Entfernung in der ersten Richtung zwischen dem Messziel (Pb) und dem Werkzeugschnellwechslerursprung (Ot) in einem Zustand erhalten wird, bei dem die montierte Oberfläche bei der Indizierungsposition angeordnet ist und das Messwerkzeug (PRO) an der Werkzeughalteeinrichtung (5) angebracht ist, und auf der Grundlage einer siebten Entfernung in der ersten Richtung zwischen dem Halteeinrichtungsreferenzpunkt (Ph) und dem Messziel (Pb) zu einer Zeit erhalten wird, wenn die montierte Oberfläche bei der Indizierungsposition angeordnet ist und das Messwerkzeug (PRO) an der Werkzeughalteeinrichtung (5) angebracht ist.

13. Drehmaschine (1) nach einem der Ansprüche 1 bis 12,
wobei der Speicher (2M) konfiguriert ist, eine zweite Wechselbeziehung zwischen einem Identifikationselement der montierten Oberfläche, der ersten Entfernung und dem Identifikationselement des angebrachten Werkzeugs zu speichern, und
wobei die Verarbeitungseinrichtung (2P) konfiguriert ist:
ein Identifikationselement einer Montageoberfläche zu erhalten, die bei der Indizierungsposition angeordnet ist; und
die erste Entfernung und das Identifikationselement des angebrachten Werkzeugs auf der Grundlage des erhaltenen Identifikationselements der Montageoberfläche zu bestimmen.

14. Drehmaschinenbearbeitungssystem (100) mit:
der Drehmaschine (1) nach Anspruch 13;
einer Werkzeugvoreinstellungseinrichtung (95), die konfiguriert ist:
ein Werkzeugidentifikationselement zu erhalten; und
die zweite Entfernung für ein gemessenes Werkzeug, das durch das erhaltene Werkzeugidentifikationselement identifiziert wird, in einem Zustand zu messen, bei dem das gemessene Werkzeug von der Werkzeughalteeinrichtung (5) entfernt ist;
einem Netzwerk (NW), über das die numerische Steuerungseinrichtung (2) und die Werkzeugvoreinstellungseinrichtung (95) miteinander kommunizieren; und
der Speichervorrichtung (90), die mit dem Netzwerk (NW) verbunden ist,
wobei die Speichervorrichtung (90) konfiguriert ist, die erste Wechselbeziehung derart zu speichern, dass die erste Wechselbeziehung das Identifikationselement des gemessenen Werkzeugs mit Daten in Wechselbeziehung stellt, die die gemessene zweite Entfernung angeben, und
wobei die Verarbeitungseinrichtung (2P) konfiguriert ist, die zweite Entfernung derart zu erhalten, dass die zweite Entfernung dem Identifikationselement des gemessenen Werkzeugs entspricht, das identisch zu dem Identifikationselement des angebrachten Werkzeugs ist.

15. Verfahren zum Schätzen einer Schneideneckenposition in einer Drehmaschine (1), wobei das Verfahren umfasst:
ein Vorbereiten (S11) einer Werkzeughalteeinrichtung (5), die einen Halteeinrichtungsreferenzpunkt (Ph) aufweist und an die ein Werkzeug (T), das eine Werkzeugschneidenecke (ED) aufweist, anbringbar ist, wobei der Halteeinrichtungsreferenzpunkt (Ph) ein Referenzpunkt ist, der auf die Werkzeughalteeinrichtung (5) und das Werkzeug (T) bezogen ist;
ein Vorbereiten (S12) eines Werkzeugschnellwechslers (4), der einen Werkzeugschnellwechslerursprung (Ot) aufweist, der ein Referenzpunkt ist, der auf den Werkzeugschnellwechsler (4) bezogen ist, und eine Vielzahl von Montageoberflächen (8) aufweist, wobei die Werkzeughalteeinrichtung (5) eine Komponente ist, die von dem Werkzeugschnellwechsler (4) getrennt ist und an der Vielzahl von Montageoberflächen (8) des Werkzeugschnellwechslers (4) selektiv und abnehmbar montierbar ist;
ein Montieren (S13) der Werkzeughalteeinrichtung (5) an einer montierten Oberfläche unter der Vielzahl von Montageoberflächen (8);
ein Anbringen (S14) eines Messwerkzeugs (PRO) an die Werkzeughalteeinrichtung (5), das ein Messziel (Pb) aufweist;
ein Bewegen (S15) des Werkzeugschnellwechslers (4), um die montierte Oberfläche bei einer Indizierungsposition anzuordnen;
ein Messen (S16) einer Entfernung in einer ersten Richtung zwischen dem Messziel (Pb) und dem Werkzeugschnellwechslerursprung (Ot);
ein Erhalten (S17) einer siebten Entfernung in der ersten Richtung zwischen dem Halteeinrichtungsreferenzpunkt (Ph) und dem Messziel (Pb) zu einer Zeit, wenn die montierte Oberfläche bei der Indizierungsposition angeordnet ist und das Messwerkzeug (PRO) an der Werkzeughalteeinrichtung (5) angebracht ist;
ein Erhalten (S18), auf der Grundlage der gemessenen Entfernung und der siebten Entfernung, einer ersten Entfernung in der ersten Richtung zwischen dem Werkzeugschnellwechslerursprung (Ot) und dem Halteeinrichtungsreferenzpunkt (Ph) und ein Speichern der ersten Entfernung;
ein Erhalten (S19) eines Identifikationselements eines gemessenen Werkzeugs;
ein Messen (S20) einer zweiten Entfernung in der ersten Richtung zwischen dem Halteeinrichtungsreferenzpunkt (Ph) und der Werkzeugschneidenecke (ED) des gemessenen Werkzeugs zu einer Zeit, wenn die montierte Oberfläche bei der Indizierungsposition angeordnet ist und das gemessene Werkzeug an der Werkzeughalteeinrichtung (5) angebracht ist;
ein Speichern (S21) einer ersten Wechselbeziehung, die das Identifikationselement des gemessenen Werkzeugs mit der zweiten Entfernung in Wechselbeziehung bringt;
ein Anbringen (S22) eines angebrachten Werkzeugs an der Werkzeughalteeinrichtung (5), um die montierte Oberfläche bei der Indizierungsposition anzuordnen;
ein Erhalten (S23) eines Identifikationselements des angebrachten Werkzeugs; und
ein Erhalten der zweiten Entfernung, sodass die zweite Entfernung dem Identifikationselement des gemessenen Werkzeugs, das identisch zu dem Identifikationselement des angebrachten Werkzeugs ist, entspricht, und ein Schätzen (S24) einer dritten Entfernung in der ersten Richtung zwischen dem Werkzeugschnellwechslerursprung (Ot) und der Werkzeugschneidenecke (ED) des angebrachten Werkzeugs auf der Grundlage der erhaltenen zweiten Entfernung und der ersten Entfernung.

## Revendications

1. Tour (1), comprenant :
un porte-outil (5) qui a un point de référence de porte-outil (Ph) et auquel est fixable un outil (T) ayant un bec d'outil (ED), le point de référence de porte-outil (Ph) étant un point de référence connexe au porte-outil (5) et à l'outil (T) ;
un support de porte-outil (4) ayant une origine de support de porte-outil (Ot), qui est un point de référence connexe au support de porte-outil (4), et ayant une pluralité de surfaces de montage (8), dans lequel le porte-outil (5) est un composant distinct du support de porte-outil (4) et montable sélectivement et de façon détachable sur la pluralité de surfaces de montage (8) du support de porte-outil (4) ;
un actionneur (6) configuré pour déplacer le support de porte-outil (4) pour agencer chaque surface de montage de la pluralité de surfaces de montage (8) sur une position de division ; et
une unité de commande numérique (2) configurée pour commander l'actionneur (6), l'unité de commande numérique (2) comprenant :
une mémoire (2M) configurée pour stocker une première distance dans une première direction entre le point de référence de porte-outil (Ph) du porte-outil (5) et l'origine de support de porte-outil (Ot) à un instant auquel une surface montée, parmi la pluralité de surfaces de montage (8), sur laquelle est monté le porte-outil (5), est agencée à la position de division et un outil fixé est fixé au porte-outil (5) ; et
un processeur (2P) configuré pour :
obtenir un identifiant de l'outil fixé ;
obtenir, d'un dispositif de stockage (90), une deuxième distance dans la première direction entre le point de référence de porte-outil (Ph) et le bec d'outil (ED) à un instant auquel la surface montée est agencée à la position de division et un outil candidat fixable au porte-outil (5) est fixé au porte-outil (5), le dispositif de stockage (90) stockant une première corrélation entre un identifiant de l'outil candidat et la deuxième distance, la deuxième distance obtenue correspondant à l'identifiant de l'outil candidat qui est identique à l'identifiant de l'outil fixé ; et
sur la base de la deuxième distance obtenue et de la première distance, estimer une troisième distance dans la première direction entre l'origine de support de porte-outil (Ot) et le bec d'outil (ED) de l'outil fixé pour commander l'actionneur (6) sur la base de la troisième distance.

2. Tour (1) selon la revendication 1,
dans lequel, lorsque l'outil (T) est fixé au porte-outil (5), l'outil (T) a un point de référence d'outil (Pt) qui est sensiblement identique au point de référence de porte-outil (Ph), et
dans lequel la deuxième distance est une distance dans la première direction entre le point de référence d'outil (Pt) et le bec d'outil (ED).

3. Tour (1) selon la revendication 1 ou 2, dans lequel le support de porte-outil (4) est une tourelle (40).

4. Tour (1) selon la revendication 3, dans lequel une différence entre une valeur maximum et une valeur minimale de la première distance parmi la pluralité de surfaces de montage (8) est supérieure à une plage de variation d'une distance dans la première direction entre le point de référence de porte-outil (Ph) et le bec d'outil (ED) à un instant auquel un outil identique est fixé au porte-outil (5).

5. Tour (1) selon la revendication 4, dans lequel une plage de variation d'une position du point de référence de porte-outil (Ph) dans la première direction à un instant auquel le porte-outil (5) est monté sur une surface de montage identique est supérieure à la plage de variation de la distance dans la première direction entre le point de référence de porte-outil (Ph) et le bec d'outil (ED) à l'instant auquel l'outil identique est fixé au porte-outil (5).

6. Tour (1) selon l'une quelconque des revendications 3 à 5,
dans lequel le support de porte-outil (4) est rotatif autour d'un axe de rotation (AX1) passant à travers l'origine de support de porte-outil (Ot), et
dans lequel la première direction est une direction perpendiculaire à l'axe de rotation (AX1) ou une direction parallèle à l'axe de rotation (AX1).

7. Tour (1) selon la revendication 6, comprenant en outre un porte-pièce (7) configuré pour supporter une pièce de façon rotative autour d'un axe de rotation de pièce (AX2) parallèle à l'axe de rotation (AX1),
dans lequel la première direction est une direction perpendiculaire à l'axe de rotation (AX1) et à l'axe de rotation de pièce (AX2).

8. Tour (1) selon la revendication 1 ou 2, dans lequel la pluralité de surfaces de montage (8) sont prévues sur un plan identique (IDP).

9. Tour (1) selon la revendication 8, dans lequel la première direction est une direction normale du plan identique (IDP) ou une direction perpendiculaire à la direction normale.

10. Tour (1) selon l'une quelconque des revendications 1 à 9,
dans lequel la mémoire (2M) est configurée pour stocker une quatrième distance dans une seconde direction orthogonale à la première direction entre le point de référence de porte-outil (Ph) du porte-outil (5) et l'origine de support de porte-outil (Ot) à l'instant auquel la surface montée est agencée à la position de division et l'outil fixé est fixé au porte-outil (5), et
dans lequel le processeur (2P) est configuré pour :
obtenir, du dispositif de stockage (90), une cinquième distance dans la seconde direction à un instant auquel l'outil candidat est fixé au porte-outil (5), le dispositif de stockage (90) stockant une troisième corrélation entre l'identifiant de l'outil candidat et la cinquième distance, la cinquième distance correspondant à l'identifiant de l'outil candidat qui est identique à l'identifiant de l'outil fixé ; et
sur la base de la cinquième distance obtenue et de la quatrième distance, estimer une sixième distance entre l'origine de support de porte-outil (Ot) et le bec d'outil (ED) de l'outil fixé pour commander l'actionneur (6) sur la base de la sixième distance.

11. Tour (1) selon l'une quelconque des revendications 1 à 10,
dans lequel l'outil (T) a un axe central d'outil (Axt),
dans lequel le porte-outil (5) a un axe central cible (Atar),
dans lequel le porte-outil (5) inclut
l'une d'une surface guide (GINGS) et d'une surface guidée (GEDS) guidée par la surface guide (GINGS), la surface guide (GINGS) s'étendant le long de l'axe central cible (Axt) dans une direction d'insertion depuis l'un du porte-outil (5) et de l'outil (T) vers l'autre du porte-outil (5) et de l'outil (T) et se rapprochant progressivement de l'axe central cible (Atar) le long de la direction d'insertion de telle sorte que l'axe central d'outil (Axt) partage sensiblement un axe commun avec l'axe central cible (Atar), et
l'un d'au moins deux surfaces d'ajustement d'orientation (OAS) ou d'au moins deux surfaces de contact (CONS) entrant en contact avec les au moins deux surfaces d'ajustement d'orientation (OAS), les au moins deux surfaces d'ajustement d'orientation (OAS) croisant une direction circonférentielle centrée autour de l'axe commun, et
l'une d'une mâchoire d'entrée en prise (EC) et d'une rainure d'entrée en prise (GV) prévue autour de l'axe commun et pouvant entrer en prise avec la mâchoire d'entrée en prise (EC), la mâchoire d'entrée en prise (EC) étant configurée pour réguler ou déréguler le déplacement de l'outil (T) dans la direction d'insertion et une direction de retrait opposée à la direction d'insertion, et
dans lequel l'outil (T) inclut
l'autre de la surface guide (GINGS) et de la surface guidée (GEDS),
l'autre des au moins deux surfaces d'ajustement d'orientation (OAS) et des au moins deux surfaces de contact (CONS), et
l'autre de la mâchoire d'entrée en prise (EC) et de la rainure d'entrée en prise (EV).

12. Tour (1) selon l'une quelconque des revendications 1 à 11,
dans lequel un outil de mesure (PRO) ayant une cible de mesure (Pb) est fixable au porte-outil (5), et
dans lequel la première distance est une valeur obtenue d'une valeur de mesure d'une distance dans la première direction entre la cible de mesure (Pb) et l'origine de support de porte-outil (Ot) dans un état où la surface montée est agencée à la position de division et l'outil de mesure (PRO) est fixé au porte-outil (5), et obtenue sur la base d'une septième distance dans la première direction entre le point de référence de porte-outil (Ph) et la cible de mesure (Pb) à un instant auquel la surface montée est agencée à la position de division et l'outil de mesure (PRO) est fixé au porte-outil (5).

13. Tour (1) selon l'une quelconque des revendications 1 à 12,
dans lequel la mémoire (2M) est configurée pour stocker une deuxième corrélation entre un identifiant de la surface montée, la première distance, et l'identifiant de l'outil fixé, et
dans lequel le processeur (2P) est configuré pour :
obtenir un identifiant d'une surface de montage agencée à la position de division ; et
déterminer la première distance et l'identifiant de l'outil fixé sur la base de l'identifiant obtenu de la surface de montage.

14. Système d'usinage à tour (100), comprenant :
le tour (1) selon la revendication 13 ;
un mesureur d'outil (95) configuré pour :
obtenir un identifiant d'outil ; et
mesurer la deuxième distance pour un outil mesuré identifié par l'identifiant d'outil obtenu dans un état où l'outil mesuré est enlevé du porte-outil (5) ;
un réseau (NW) par l'intermédiaire duquel l'unité de commande numérique (2) et le mesureur d'outil (95) communiquent l'un avec l'autre ; et
le dispositif de stockage (90) connecté au réseau (NW),
dans lequel le dispositif de stockage (90) est configuré pour stocker la première corrélation de manière telle que la première corrélation corrèle l'identifiant de l'outil mesuré avec des données indiquant la deuxième distance mesurée, et
dans lequel le processeur (2P) est configuré pour obtenir la deuxième distance de manière telle que la deuxième distance correspond à l'identifiant de l'outil mesuré qui est identique à l'identifiant de l'outil fixé.

15. Procédé pour estimer une position de bec dans un tour (1), le procédé comprenant :
la préparation (S11) d'un porte-outil (5) qui a un point de référence de porte-outil (Ph) et auquel est fixable un outil (T) ayant un bec d'outil (ED), le point de référence de porte-outil (Ph) étant un point de référence connexe au porte-outil (5) et à l'outil (T) ;
la préparation (S12) d'un support de porte-outil (4) ayant une origine de support de porte-outil (Ot), qui est un point de référence connexe au support de porte-outil (4), et ayant une pluralité de surfaces de montage (8), dans lequel le porte-outil (5) est un composant distinct du support de porte-outil (4) et montable sélectivement et de façon détachable sur la pluralité de surfaces de montage (8) du support de porte-outil (4) ;
le montage (S13) du porte-outil (5) sur une surface montée parmi la pluralité de surfaces de montage (8) ;
la fixation (S14), au porte-outil (5), d'un outil de mesure (PRO) ayant une cible de mesure (Pb) ;
le déplacement (S15) du support de porte-outil (4) pour agencer la surface montée sur une position de division ;
la mesure (S16) d'une distance dans une première direction entre la cible de mesure (Pb) et l'origine de support de porte-outil (Ot) ;
l'obtention (S17) d'une septième distance dans la première direction entre le point de référence de porte-outil (Ph) et la cible de mesure (Pb) à un instant auquel la surface montée est agencée à la position de division et l'outil de mesure (PRO) est fixé au porte-outil (5) ;
sur la base de la distance mesurée et de la septième distance, l'obtention (S18) d'une première distance dans la première direction entre l'origine de support de porte-outil (Ot) et le point de référence de porte-outil (Ph) et le stockage de la première distance ;
l'obtention (S19) d'un identifiant d'un outil mesuré ;
la mesure (S20) d'une deuxième distance dans la première direction entre le point de référence de porte-outil (Ph) et le bec d'outil (ED) de l'outil, mesurée à un instant auquel la surface montée est agencée à la position de division et l'outil mesuré est fixé au porte-outil (5) ;
le stockage (S21) d'une première corrélation qui corrèle l'identifiant de l'outil mesuré avec la deuxième distance ;
la fixation (S22) d'un outil fixé au porte-outil (5) pour agencer la surface montée à la position de division ;
l'obtention (S23) d'un identifiant de l'outil fixé ; et
l'obtention de la deuxième distance de manière telle que la deuxième distance correspond à l'identifiant de l'outil mesuré qui est identique à l'identifiant de l'outil fixé, et l'estimation (S24) d'une troisième distance dans la première direction entre l'origine de support de porte-outil (Ot) et le bec d'outil (ED) de l'outil fixé, sur la base de la deuxième distance obtenue et de la première distance.
